# EUROPEAN PATENT APPLICATION

(11) **EP 1 615 358 A1**
(43) Date of publication of application: **11.01.2006**
(21) Application number: 04717790.2
(22) Date of filing: 05.03.2004
(51) Int. Cl.: H04B 10/12

(54) **PULSE TRAIN OPTICAL TRANSMISSION SYSTEM AND TRANSMITTER AND RECEIVER APPARATUSES USED THEREIN**

(30) Priority: 10.03.2003 JP 2003063310; 10.03.2003 JP 2003063309
(71) Applicant: MATSUSHITA ELECTRIC INDUSTRIAL CO., LTD., Kadoma-shi, Osaka 571-8501 (JP)
(72) Inventor: FUSE, Masaru, Osake 572-0083 (JP)
(74) Representative: Gassner, Wolfgang
(86) International application number: PCT/JP2004/002811
(87) International publication number: WO 2004/082175

(57) **Abstract**

An optical transmission system for optically transmitting at least one data signal includes pulse train generating means for converting each of the at least one data signal respectively to a pulse train, based on at least one encoding pattern that is uniquely predetermined corresponding to the at least one data signal, and outputting the pulse train, optical modulating means for converting the pulse train output from the pulse train generating means to an optically modulated signal and outputting the signal, an optical transmission path for transmitting the optically modulated signal that is output from the optical modulating means, optical detecting means for converting the optically modulated signal transmitted on the optical transmission path to an electrical signal and outputting the signal, and data signal extracting means for obtaining the pulse train from the electrical signal that is output from the optical detecting means based on a decoding pattern that uniquely corresponds to the encoding pattern and extracting the data signal.

## Description

### TECHNICAL FIELD

The present invention relates to a system for transmitting pulse trains and transmitter and receiver apparatuses used therein. More specifically, the present invention relates to a system for transmitting pulse trains using optical communications and transmitter and receiver apparatuses used therein.

### BACKGROUND ART

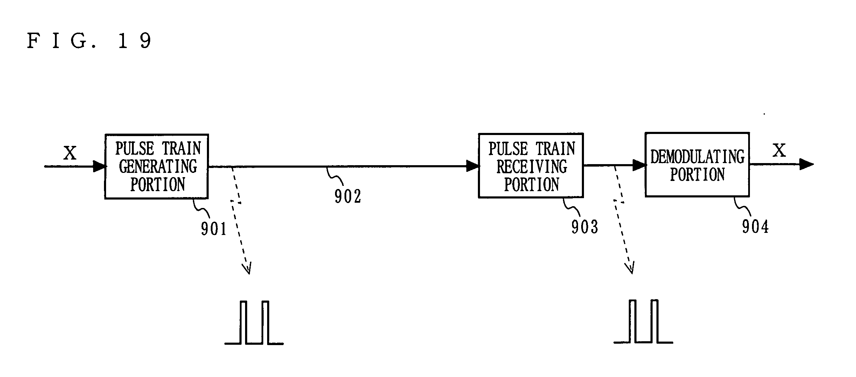

FIG. 19 is a diagram showing the configuration of a conventional transmission system for transmitting short pulse trains. In FIG. 19, the conventional transmission system includes a pulse train generating portion 901, an electric transmission path 902, a pulse train receiving portion 903, and a demodulating portion 904. The pulse train generating portion 901 and the pulse train receiving portion 903 are connected via the electric transmission path 902. The pulse train receiving portion 903 and the demodulating portion 904 are connected with or without a wire.

The operation of the conventional transmission system configured as above will be described. The pulse train generating portion 901 converts an input data signal X to a short pulse train, based on a predetermined encoding pattern, and sends it out to the electric transmission path 902. The pulse train receiving portion 903 performs predetermined processing such as amplification and/or waveform shaping with respect to the short pulse train that has been transmitted via the electric transmission path 902, and sends out the processed short pulse train to the demodulating portion 904 with or without a wire. The demodulating portion 904 demodulates the original data signal X from the short pulse train that has been subjected to the predetermined processing by the pulse train receiving portion 903, using a decoding pattern that corresponds uniquely to the encoding pattern, and extracts it.

The conventional transmission system as described above can be applied to, for example, a wireless access system using short pulse trains called UWB (Ultra Wide Band) signals. The UWB signals are unipolar or bipolar baseband pulse trains having a small width. The UWB signals are signals whose spectra are spread. Therefore, the peak power of the UWB signals is suppressed. Thus, the disturbance level to other wireless signals can be reduced. Since a specific encoding/decoding pattern corresponding to each wireless terminal (short pulse train) is assigned, so that the interference robustness is improved. Therefore, a wireless system in which in the same frequency band, a plurality of wireless signals can be multiplexed can be realized.

For example, Japanese Laid-Open Patent Publication Nos. 2001-308899 and 6-326723 are conventional techniques that are similar to the above-described conventional transmission system.

However, for short pulse signals such as UWB signals, the transmission loss becomes larger as the band becomes wider. Therefore, when a general electric line is used as a transmission path, the distance in which a short pulse signal can be transmitted is significantly short.

In the course of propagation in the transmission path, the transmission waveform deteriorates significantly due to the influence of the dependency of transmission characteristics such as group delay on the frequency over a wide band. Therefore, even if the power with which short pulse signals are sent out is raised, the transmission distance is limited.

The transmission system using short pulse signals has a specific problem in that these factors limits the service area to being small.

### DISCLOSURE OF THE INVENTION

Therefore, the object of the present invention is to provide a transmission system having an enlarged wired transmission distance in which short pulse signals can be transmitted without being affected by the characteristics of the transmission path and transmitter and receiver apparatuses used therein.

To achieve the above objects, the present invention has the following features. A first aspect of the present invention is directed to an optical transmission system for optically transmitting at least one data signal, comprising pulse train generating means for converting each of the at least one data signal respectively to a pulse train, based on at least one encoding pattern that is uniquely predetermined corresponding to the at least one data signal, and outputting the pulse train; optical modulating means for converting the at least one pulse train output from the pulse train generating means to an optically modulated signal and outputting the signal; an optical transmission path for transmitting the optically modulated signal that is output from the optical modulating means; optical detecting means for converting the optically modulated signal transmitted on the optical transmission path to an electrical signal and outputting the signal; and data signal extracting means for obtaining the pulse train from the electrical signal that is output from the optical detecting means based on a decoding pattern that uniquely corresponds to the encoding pattern and extracting the data signal.

Thus, the pulse train is converted and then transmitted, so that a transmission system having an increased wired transmission distance in which a short pulse signal can be transmitted without being affected by the influence of the characteristics of the transmission path can be provided.

For example, the pulse train generating means converts one data signal to a pulse train.

Thus, one-to-one optical communications can be achieved.

Preferably, the pulse train generating means comprises a pulse train generating portion for converting an input data signal to a pulse train based on a predetermined encoding pattern, and outputting the pulse train, the optical modulating means comprises an optical modulating portion for converting the pulse train output from the pulse train generating portion to an optically intensity modulated signal and outputting the signal, the optical detecting means comprises an optical detecting portion for reconverting the optically intensity modulated signal transmitted on the optical transmission path to an electrical signal and outputting the signal, and the data signal extracting means comprises a demodulating portion for extracting the pulse train from the electrical signal that is output from the optical detecting portion based on a decoding pattern that uniquely corresponds to the encoding pattern and demodulating the data signal.

Thus, a data signal is converted to a pulse train based on an encoding pattern predetermined uniquely corresponding to the data signal and converted to an optical signal, and then transmitted optically. Then, the received optical signal is converted to a pulse train, and the data signal is demodulated from the pulse train based on a decoding pattern uniquely corresponding to the encoding pattern. Therefore, the pulse train can be transmitted in a long distance without being affected by the characteristics of the transmission path, compared with the transmission of the pulse train in an electrical transmission path.

Preferably, the pulse train generating means comprises a pulse train generating portion for converting an input data signal to a pulse train based on a predetermined encoding pattern, and outputting the pulse train, the optical modulating means comprises an optical modulating portion for converting the pulse train output from the pulse train generating portion to an optically intensity modulated signal and outputting the signal, the optical detecting means comprises an optical detecting portion for reconverting the optically intensity modulated signal transmitted on the optical transmission path to an electrical signal and outputting the signal, and the data signal extracting means comprises a radiating portion for radiating the electrical signal that is output from the detecting portion as a wireless signal, and a wireless terminal for extracting the pulse train from the wireless signal radiated from the radiating portion based on a decoding pattern that uniquely corresponds to the encoding pattern and demodulating the data signal.

Thus, the pulse train generated based on a data signal is converted to an optical signal and transmitted optically, and then radiated via an antenna or the like. Therefore, an optical transmission system in which a wide band wireless signal is transmitted in a long distance with high quality can be realized.

Preferably, the pulse train generating means comprises a pulse train generating portion for converting an input data signal to a pulse train based on a predetermined encoding pattern, and outputting the pulse train, and the optical modulating means comprises an optical modulating portion for converting the pulse train output from the pulse train generating portion to an optically intensity modulated signal and outputting the signal, the optical transmission system further comprises a pulse compressing portion for receiving the optically intensity modulated signal transmitted in the transmission path, compressing a pulse width of a pulse train, which is modulation information, or reducing a rising time and/or a falling time of the pulse train, and outputting a result, wherein the optical detecting means comprises an optical detecting portion for converting an optical signal output from the pulse compressing portion to an electrical signal and outputting the signal.

Thus, the pulse width of the optical signal after optical transmission can be reduced, so that in the transmitter apparatus, the condition that the pulse width should be reduced can be relaxed.

Preferably, the pulse train generating means comprises a pulse train generating portion for converting an input data signal to a pulse train based on a predetermined encoding pattern, and outputting the pulse train, and a filter portion for increasing a pulse width of the pulse train output from the pulse train generating portion, or increasing a rising time and a falling time of the pulse train, and outputting a result, the optical modulating means comprises an optical modulating portion for converting the pulse train output from the filter portion to an optically intensity modulated signal and outputting the signal, the optical transmission system further comprises a pulse compressing portion for receiving the optically intensity modulated signal transmitted in the transmission path, compressing a pulse width of a pulse train, which is modulation information, or reducing a rising time and/or a falling time of the pulse train, and outputting a result, wherein the optical detecting means comprises an optical detecting portion for converting an optical signal output from the pulse compressing portion to an electrical signal and outputting the signal.

Thus, the pulse width of a transmitted signal is increased before optical transmission and reduced after the optical transmission, so that in the transmitted signal, the condition that the pulse width should be reduced can be relaxed.

Preferably, the pulse train generating means comprises a pulse train generating portion for converting an input data signal to a pulse train based on a predetermined encoding pattern, and outputting the pulse train, and the optical modulating means comprises an optical angle modulating portion for converting the pulse train output from the pulse train generating portion to an optically angle modulated signal and outputting the signal, the optical detecting means comprises an optical interference portion for receiving an optically angle modulated signal transmitted on the optical transmission path and detecting correlation between adjacent bits of a pulse train, which is modulation information, so as to output two optical differential signals that have opposite polarities to each other and correspond to differential components of the pulse train, and an optical detecting portion for converting one of the optical differential signals that are output from the optical interference portion to an electrical signal and outputting the signal.

Thus, an optical transmission system that transmits a wide band signal with high quality and in a cost-efficient manner without increasing the burden on the transmitter apparatus and the transmission path can be realized.

For example, the optical interference portion comprises an optical splitting portion for splitting the input optically angle modulated signal into two, an optical delay portion for supplying a predetermined optical delay amount to one or both of the optically angle modulated signals that are split and output from the optical splitting portion and outputting a result, and an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other.

Thus, the configuration of the optical interference portion can be simplified.

Preferably, the predetermined optical delay amount is smaller than one bit width of the pulse train.

Thus, the parameter of the optical interference system can be set as appropriate, so that an optical system in which a wide band signal is transmitted with further high quality can be realized.

Preferably, the pulse train generating means comprises a pulse train generating portion for converting an input data signal to a pulse train based on a predetermined encoding pattern, and outputting the pulse train, and the optical modulating means comprises an optical angle modulating portion for converting the pulse train output from the pulse train generating portion to an optically angle modulated signal and outputting the signal, the optical detecting means comprises an optical interference portion for receiving an optically angle modulated signal transmitted on the optical transmission path and detecting correlation between adjacent bits of a pulse train, which is modulation information, so as to output two optical differential signals that have opposite polarities to each other and correspond to differential components of the pulse train, and an optical balance detecting portion for reconverting the two optical differential signals that are output from the optical interference portion to respective electrical signals and for combining the two signals so as to generate and output a bipolar differential pulse train.

Thus, an optical transmission system that transmits a wide band signal with high quality and in a cost-efficient manner without increasing the burden on the transmitter apparatus and the transmission path can be realized.

For example, the optical interference portion comprises an optical splitting portion for splitting the input optically angle modulated signal into two, an optical delay portion for supplying a predetermined optical delay amount to one or both of the optically angle modulated signals that are split and output from the optical splitting portion and outputting a result, and an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other.

Thus, the configuration of the optical interference portion can be simplified.

Preferably, the predetermined optical delay amount is smaller than one bit width of the pulse train.

Thus, the parameter of the optical interference system can be set as appropriate, so that an optical system in which a wide band signal is transmitted with further high quality can be realized.

For example, the optical balance detecting portion comprises a first optical detecting portion for reconverting one of the optical differential signals that are output from the optical interference portion to a first differential pulse train, which is an electrical signal, and outputting the signal; a second optical detecting portion for reconverting the other optical differential signal that is output from the optical interference portion to a second differential pulse train, which is an electrical signal, and outputting the signal; a delay portion for supplying a predetermined electrical delay amount to the first differential pulse train output from the first optical detecting portion and/or the second differential pulse train output from the second optical detecting portion and outputting a result; and a combining portion for combining the first differential pulse train and the second differential pulse train that have been subjected to the delay processing in the delay portion to output a bipolar differential pulse train.

Thus, a bipolar short pulse train is generated by optical signal processing, so that an optical transmission system that transmits a wide band signal with high quality and in a cost-efficient manner without increasing the burden on the transmitter apparatus, the transmission path and the radiating apparatus can be realized.

For example, the optical interference portion comprises an optical splitting portion for splitting the input optically angle modulated signal into two, an optical delay portion for supplying a predetermined optical delay amount to one or both of the optically angle modulated signals that are split and output from the optical splitting portion and outputting a result, and an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other, wherein the optical balance detecting portion comprises a first optical detecting portion for reconverting one of the optical differential signals that are output from the optical interference portion to a first differential pulse train, which is an electrical signal, and outputting the signal; a second optical detecting portion for reconverting the other optical differential signal that is output from the optical interference portion to a second differential pulse train, which is an electrical signal, and outputting the signal; a delay portion for supplying a predetermined electrical delay amount to the first differential pulse train output from the first optical detecting portion and/or the second differential pulse train output from the second optical detecting portion and outputting a result; and a combining portion for combining the first differential pulse train and the second differential pulse train that have been subjected to the delay processing in the delay portion to output a bipolar differential pulse train.

Thus, the configurations of the optical interference portion and the optical balance detecting portion can be simplified.

Preferably, the predetermined electrical delay amount is equal to the predetermined optical delay amount.

Thus, the parameter of the optical detecting system can be set as appropriate, so that an optical system that transmits a wider band signal is transmitted in a further cost-efficient manner can be realized.

Preferably, the pulse train generating means comprises a pulse train generating portion for converting an input data signal to a pulse train based on a predetermined encoding pattern, and outputting the pulse train, and the optical modulating means comprises an optical modulating portion for converting the pulse train output from the pulse train generating portion to an optically intensity modulated signal and outputting the signal, the optical transmission system further comprises a wavelength dispersing portion that has wavelength dispersion characteristics and receives the optically intensity modulated signal transmitted on the optical transmission path, compresses a pulse width of a pulse train or a synthesized signal, which is modulation information, or reduces a rising time and/or a falling time of the pulse train, and outputting a result, wherein the optical detecting means comprises an optical detecting portion for converting an optical signal output from the wavelength dispersing portion to an electrical signal and outputting the signal.

Thus, the pulse width of an optical signal can be reduced, utilizing the non-linearity of optical fibers, so that an optical transmission system that transmits with high quality and in a cost efficient manner without using a special device can be realized.

Preferably, the optical modulating portion uses a directly optical modulation scheme in which a current injected to a semiconductor laser is modulated with an input pulse train to output an optically intensity modulated signal.

Thus, a more cost-efficient optical transmission system can be realized by using the direct modulation system as the optical modulation system.

For example, the pulse train generating means converts at least 2 data signals to pulse trains.

Thus, multiplex transmission of data signals can be achieved.

Preferably, the pulse train generating means comprises a plurality of pulse train generating portions for converting a plurality of data signals to respective pulse trains that are of predetermined modulation types, based on encoding patterns each of which is predetermined corresponding to an input data signal and is different from one another, and outputting the pulse train, and wherein the optical modulating means comprises a plurality of optical modulating portions that are provided corresponding to the pulse train generating portions and convert the pulse trains output from the respective pulse train generating portions to respective optically modulated signals and outputting the signals, and an optical combining portion for combining the optically modulated signals output from the plurality of optical modulating portions and outputting a result to the optical transmission path.

Thus, the pulse trains generated by encoding patterns specific to the data signals are converted to optical signals, combined and transmitted optically. Thereafter, a desired data signal is selectively demodulated and extracted by a specific decoding pattern. Therefore, an optical transmission system that accommodates a plurality of data signals with high quality and in a simple manner can be realized.

Preferably, the optical detecting means comprises an optical detecting portion for reconverting the optically modulated signals transmitted on the optical transmission path to electrical signals and outputting the signals, and the data signal extracting means comprises a demodulating/separating portion for extracting the pulse trains from the electrical signals that are output from the optical detecting portion based on decoding patterns that uniquely correspond to the plurality of encoding patterns and demodulating the data signals.

Thus, the pulse trains generated by encoding patterns specific respectively to the plurality of data signals are converted to optical signals, combined and transmitted optically. Thereafter, a desired data signal is selectively demodulated and extracted by a decoding pattern corresponding to the encoding pattern. Therefore, an optical transmission system that multiplexes a plurality of data signals with high quality and in a simple manner can be realized.

Preferably, the optical detecting means comprises an optical splitting portion for splitting the optically modulated signal transmitted on the optical transmission path to a plurality of signals and outputting the signals, and a plurality of optical detecting portions that are provided corresponding respectively to the plurality of optically modulated signals that are split and output by the optical splitting portion, and reconvert the optically modulated signals to electrical signals to output the signals, and wherein the data signal extracting means comprises a plurality of demodulating/separating portion that are provided corresponding respectively to the plurality of optical detecting portions and extract the pulse trains from the electrical signals that are output from the optical detecting portion based on decoding patterns that uniquely correspond to the plurality of encoding patterns and demodulate the data signals.

Thus, the pulse trains generated by encoding patterns specific respectively to the plurality of data signals are converted to optical signals, combined and transmitted optically. Thereafter, in each received signal that is optically demultiplexed, a corresponding data signal is demodulated and extracted by a decoding pattern corresponding to the encoding pattern. Therefore, an optical transmission system that performs multiplex transmission of a plurality of data signals with high quality and in a simple manner can be realized.

Preferably, the optical transmission system further comprises a data optical modulating portion for converting a data signal having a lower rate than a repetitive cycle of pulse trains output from the plurality of pulse train generating portions to an optically modulated signal and outputting the signal, wherein the optical synthesizing portion further synthesizes the data signal output from the data optical modulating portion, and the data signal extracting means comprises a data separating portion for outputting the electrical signals output from the optical detecting portion separated into the data signal having a lower rate than the repetitive cycle of the pulse trains and other signals (hereinafter, referred to as "synthesized signal"), and a demodulating/separating portion for extracting the pulse trains from the synthesized signal output from the data separating portion based on decoding patterns that uniquely correspond to the plurality of encoding patterns and demodulating the data signals.

Thus, a plurality of data signals are converted to pulse trains, and multiplexed and optically transmitted, while a data signal having a repetitive cycle that is slower than the pulse trains is multiplexed, so that an optical transmission system that performs multiplex transmission of more data signals can be realized in a simple manner.

Preferably, the optical transmission system further comprises a wavelength control portion for controlling such that wavelengths of optically modulated signals output from the plurality of optical modulating portions do not overlap each other.

Thus, a plurality of data signals are converted to pulse trains and converted to optically modulated signals, which are combined and transmitted optically, and then a desired data signal is demodulated selectively and extracted, and the wavelength of the optically modulated signal is controlled as appropriate. Therefore, quality deterioration due to the interference between the optically modulated signals can be prevented and a plurality of data signals can be multiplexed and accommodated with high quality.

Preferably, the pulse train generating means comprises a plurality of input pulse train generating portions for converting a plurality of data signals to respective pulse trains that are of predetermined modulation types, based on encoding patterns each of which is predetermined corresponding to the input data signal and different from one another, and outputting the pulse train, and wherein the optical modulating means comprises a synthesizing portion for outputting an electrical signal obtained by synthesizing pulse trains output from the plurality of pulse train generating portions, and an optical modulating portion for converting the electrical signal output from the synthesizing portion to an optically modulated signal and outputting the signal.

Thus, the pulse trains generated by encoding patterns specific to the data signals are synthesized and transmitted optically. Thereafter, a desired data signal is selectively demodulated and extracted by a specific decoding pattern. Therefore, an optical transmission system that accommodates a plurality of data signals with high quality and in a simple manner can be realized.

Preferably, the optical detecting means comprises an optical detecting portion for reconverting the optically modulated signals transmitted on the optical transmission path to electrical signals and outputting the signals, and the data signal extracting means comprises a demodulating/separating portion for extracting the pulse trains from the electrical signals that are output from the optical detecting portion based on decoding patterns that uniquely correspond to the plurality of encoding patterns and demodulating the data signals.

Thus, the pulse trains generated by encoding patterns specific to a plurality of data signals are synthesized and transmitted optically. Thereafter, a desired data signal is selectively demodulated and extracted by a decoding pattern corresponding to the encoding pattern. Therefore, an optical transmission system that multiplexes a plurality of data signals with high quality and in a simple manner can be realized.

Preferably, the optical detecting means comprises an optical detecting portion for reconverting the optically modulated signals transmitted on the optical transmission path to electrical signals and outputting the signals, and the data signal extracting means comprises a radiating portion for radiating the electrical signals output from the optical detecting portion as wireless signals; and a plurality of wireless terminals for extracting the pulse trains from the wireless signals that are output from the radiating portion based on decoding patterns that uniquely correspond to the plurality of encoding patterns and demodulating the data signals.

Thus, a plurality of pulse trains generated based on a plurality of data signals are combined, converted to optical signals and transmitted optically, and then radiated via an antenna or the like. Therefore, an optical transmission system that performs multiplex transmission of a plurality of wide band wireless signals with high quality can be realized.

Preferably, the optical detecting means comprises an optical splitting portion for splitting the optically modulated signal transmitted on the optical transmission path to a plurality of signals and outputting the signals, and a plurality of optical detecting portions that are provided corresponding respectively to the plurality of optically modulated signals that are split and output by the optical splitting portion, and reconvert the optically modulated signals to electrical signals and outputs the signals, and wherein the data signal extracting means comprises a plurality of demodulating/separating portion that are provided corresponding respectively to the plurality of optical detecting portions and extract the pulse trains from the electrical signals that are output from the optical detecting portion based on decoding patterns that uniquely correspond to the plurality of encoding patterns and demodulate the data signals.

Thus, the pulse trains generated by encoding patterns specific respectively to the plurality of data signals are synthesized and optically demultiplexed. Thereafter, in each received signal that is optically demultiplexed, a corresponding data signal is demodulated and extracted based on a decoding pattern corresponding to the encoding pattern. Therefore, an optical transmission system that performs multiplex transmission of a plurality of data signals with high quality and in a simple manner can be realized.

Preferably, the synthesizing portion further synthesizes a data signal having a lower rate than a repetitive cycle of pulse trains output from the plurality of pulse train generating portions, wherein the optical detecting means comprises an optical splitting portion for splitting the optically modulated signal transmitted on the optical transmission path to a plurality of signals and outputting the signals, a plurality of optical detecting portions that are provided corresponding respectively to the plurality of opticallymodulated signals that are split and output by the optical splitting portion, and reconvert the optically modulated signals to electrical signals and outputs the signals, and data optical detecting portion for reconverting one of the optically modulated signals that are split and output by the optical splitting portion to a data signal having a lower rate than the repetitive cycle of the pulse trains output from the plurality of pulse train generating portions and outputting the signal, wherein the data signal extracting means comprises a plurality of demodulating/separating portions that are provided corresponding respectively to the plurality of optical detecting portions and extract the pulse trains from the electrical signals that are output from the optical detecting portion based on decoding patterns that uniquely correspond to the plurality of encoding patterns and demodulate the data signals.

Thus, a plurality of data signals are converted to respective pulse trains, and multiplexed, while a data signal having a repetitive cycle that is slower than that of the pulse trains is multiplexed and transmitted optically, so that an optical transmission system that performs multiplex transmission of more data signals can be realized in a simple manner.

Preferably, the optical transmission system further comprises a pulse compressing portion for receiving the optically intensity modulated signal transmitted in the transmission path, compressing a pulse width of a pulse train, which is modulation information, or reducing a rising time and/or a falling time of the pulse train, and outputting a result, wherein the optical detecting means comprises an optical detecting portion for converting an optical signal output from the pulse compressing portion to an electrical signal and outputting the signal.

Thus, the pulse width of an optical signal after optical transmission is reduced, so that an optical transmission system that suppresses the influence of the wide band characteristics of the transmitter apparatus and the transmission path, and performs multiplex transmission of more wide band wireless signals with high quality can be realized.

Preferably, the optical transmission system further comprises a filter portion that is provided each of the pulse train generating portions and the synthesizing portion and increases a pulse width of the pulse train output from the pulse train generating portion, or increases a rising time and a falling time of the pulse train and outputs a result, and a pulse compressing portion for receiving the optically intensity modulated signal transmitted in the transmission path, compressing a pulse width of a pulse train, which is modulation information, or reducing a rising time and/or a falling time of the pulse train, and outputting a result, wherein the optical detecting means comprises an optical detecting portion for converting an optical signal output from the pulse compressing portion to an electrical signal and outputting the signal.

Thus, the pulse width of a transmitted signal is increased before optical transmission and reduced after the optical transmission, so that an optical transmission system that suppresses the influence of the wide band characteristics of the transmitter apparatus and the transmission path, and performs multiplex transmission of more wide band wireless signals more cost efficiently can be realized.

Preferably, the optical modulating portion is an optical angle modulating portion for converting the pulse train output from the pulse train generating portion to an optically angle modulated signal and outputting the signal, and the optical detecting means comprises an optical interference portion for receiving an optically angle modulated signal transmitted on the optical transmission path and detecting correlation between adjacent bits of a pulse train, which is modulation information, so as to output two optical differential signals that have opposite polarities to each other and correspond to differential components of the pulse train, and an optical detecting portion for converting one of the optical differential signals that are output from the optical interference portion to an electrical signal and out putting the signal.

Thus, an optical transmission system that performs multiplex transmission of wide band wireless signals with high quality and in a cost-efficient manner without increasing the burden on the transmitter apparatus and the transmission path can be realized.

For example, the optical interference portion comprises an optical splitting portion for splitting the input optically angle modulated signal into two, an optical delay portion for supplying a predetermined optical delay amount to one or both of the optically angle modulated signals that are split and output from the optical splitting portion and outputting a result, and an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other.

Thus, the configuration of the optical interference portion can be simplified.

Preferably, the predetermined optical delay amount is smaller than one bit width of the pulse train.

Thus, the parameter of the optical interference system can be set as appropriate, so that an optical system that transmits a wide band signal with a higher quality can be realized.

Preferably, the optical modulating portion is an optical angle modulating portion for converting the pulse train output from the pulse train generating portion to an optically angle modulated signal and outputting the signal, the optical detecting means comprises an optical interference portion for receiving an optically angle modulated signal transmitted on the optical transmission path and detecting correlation between adjacent bits of a pulse train, which is modulation information, so as to output two optical differential signals that have opposite polarities to each other and correspond to differential components of the pulse train, and an optical balance detecting portion for reconverting the two optical differential signals that are output from the optical interference portion to respective electrical signals and for combining the two signals so as to generate and output a bipolar differential pulse train.

Thus, an optical transmission system that performs multiplex transmission of even wider signals with high quality and in a cost-efficient manner without increasing the burden on the transmitter apparatus and the transmission path can be realized.

For example, the optical interference portion comprises an optical splitting portion for splitting the input optically angle modulated signal into two, an optical delay portion for supplying a predetermined optical delay amount to one or both of the optically angle modulated signals that are split and output from the optical splitting portion and outputting a result, and an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other.

Thus, the configuration of the optical interference portion can be simplified.

Preferably, the predetermined optical delay amount is smaller than one bit width of the pulse train.

Thus, the parameter of the optical interference system can be set as appropriate, so that an optical system that performs multiplex transmission of wider signals with a higher quality can be realized.

For example, the optical balance detecting portion comprises a first optical detecting portion for reconverting one of the optical differential signals that are output from the optical interference portion to a first differential pulse train, which is an electrical signal, and outputting the signal; a second optical detecting portion for reconverting the other optical differential signal that is output from the optical interference portion to a second differential pulse train, which is an electrical signal, and outputting the signal; a delay portion for supplying a predetermined electrical delay amount to the first differential pulse train output from the first optical detecting portion and/or the second differential pulse train output from the second optical detecting portion and outputting a result; and a combining portion for synthesizing the first differential pulse train and the second differential pulse train that have been subjected to the delay processing in the delay portion to output a bipolar differential pulse train.

Thus, bipolar short pulse trains are generated by optical signal processing, so that an optical transmission system that performs multiplex transmission of even wider signals with a higher quality and in a cost-efficient manner without increasing the burden on the transmitter apparatus, the transmission path and the radiating apparatus can be realized.

For example, the optical interference portion comprises an optical splitting portion for splitting the input optically angle modulated signal into two, an optical delay portion for supplying a predetermined optical delay amount to one or both of the optically angle modulated signals that are split and output from the optical splitting portion and outputting a result, and an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other, wherein the optical balance detecting portion comprises a first optical detecting portion for reconverting one of the optical differential signals that are output from the optical interference portion to a first differential pulse train, which is an electrical signal, and outputting the signal; a second optical detecting portion for reconverting the other optical differential signal that is output from the optical interference portion to a second differential pulse train, which is an electrical signal, and outputting the signal; a delay portion for supplying a predetermined electrical delay amount to the first differential pulse train output from the first optical detecting portion and/or the second differential pulse train output from the second optical detecting portion and outputting a result; and a combining portion for synthesizing the first differential pulse train and the second differential pulse train that have been subjected to the delay processing in the delay portion to output a bipolar differential pulse train.

Thus, the configurations of the optical interference portion and the optical balance detecting portion can be simplified.

Preferably, the predetermined electrical delay amount is equal to the predetermined optical delay amount.

Thus, the parameter of the optical detecting system can be set as appropriate, so that an optical system that performs multiplex transmission of even wider signals more cost-efficiently can be realized.

Preferably, the optical modulating portion converts the pulse train output from the pulse train generating portion to an optically intensity modulated signal and outputs the signal, the optical transmission system further comprises a wavelength dispersing portion that has wavelength dispersion characteristics and receives the optically intensity modulated signal transmitted on the optical transmission path, compresses a pulse width of a pulse train or a synthesized signal, which is modulation information, or reduces a rising time and/or a falling time of the pulse train, and outputting a result, wherein the optical detecting means comprises an optical detecting portion for converting an optical signal output from the wavelength dispersing portion to an electrical signal and outputting the signal.

Thus, the pulse width of an optical signal can be reduced, utilizing the non-linearity of optical fibers, so that an optical transmission system that performs multiplex transmission with high quality and in a cost efficient manner without using a special device can be realized.

Preferably, the optical modulating portion uses a directly optical modulation scheme in which a current injected to a semiconductor laser is modulated with an input pulse train to output an optically intensity modulated signal.

Thus, an optical transmission system that performs multiplex transmission of more wide band wireless signals cost-efficiently can be realized by using the direct modulation system as the optical modulation system.

Preferably, a modulation type of a pulse train converted by the pulse train generating means is a pulse position modulation type.

Preferably, a pulse train obtained by the data signal extracting means is an UWB (Ultra Wide Band) signal.

Thus, an optical transmission system that can transmit large capacity data with wide band signals can be realized by using the position modulation type or UWB signals for the pulse trains.

The second aspect of the present invention is directed to a transmitter apparatus for optically transmitting at least one data signal, comprising pulse train generating means for converting each of the at least one data signal respectively to pulse trains, based on at least one encoding pattern that is uniquely predetermined corresponding to the at least one data signal, and outputting the pulse train; and optical modulating means for converting the at least one pulse train output from the pulse train generating means to an optically modulated signal and outputting the signal to an optical transmission path.

The third aspect of the present invention is directed to a receiver apparatus for receiving an optically modulated signal that has been modulated with a pulse train obtained by converging at least one data signal, based on at least one encoding pattern that is uniquely predetermined corresponding to the at least one data signal, via an optical transmission path, comprising optical detecting means for converting the optically modulated signal transmitted on the optical transmission path to an electrical signal and outputting the signal; and data signal extracting means for obtaining the pulse train from the electrical signal that is output from the optical detecting means based on a decoding pattern that uniquely corresponds to the encoding pattern and extracting the data signal.

### BRIEF DESCRIPTION OF THE DRAWINGS

FIG. 1 is a diagram showing the configuration of a transmission system 1 of a first embodiment of the present invention;
FIG. 2 is a diagram showing the configuration of a transmission system 2 of a second embodiment of the present invention;
FIG. 3A is a diagram showing the configuration of a transmission system 3 of a third embodiment of the present invention;
FIG. 3B is a diagram showing the time waveform of a pulse train (a) output from a pulse train generating portion 111 and an optically modulated signal (a) transmitted in an optical transmission path 200;
FIG. 3C is a diagram showing the time waveform of a pulse train (b) output from a pulse compressing portion 321 and an optical detecting portion 301;
FIG. 4A is a diagram showing the configuration of a transmission system 4 of a fourth embodiment of the present invention;
FIG. 4B is a diagram showing the time waveform of a pulse train (a) output from a pulse train generating portion;
FIG. 4C is a diagram showing the time waveform of an electric signal (b) output from a filter portion and a modulated signal (b) that is transmitted on the optical transmission path 200;
FIG. 4D is a diagram showing the time waveform of a pulse train (c) output from a pulse compressing portion 321 and an optical detecting portion 301;
FIG. 5A is a diagram showing the configuration of a transmission system 5 of a fifth embodiment of the present invention;
FIG. 5B is a diagram showing the time waveform of a pulse train (a) output from a pulse train generating portion 132 and an optically angle modulated signal (a) that is transmitted on the optical transmission path;
FIG. 5C is a diagram showing the time waveforms of one optical signal (a') that is output from an optical splitting portion 331 and an optical signal (b) that is output from an optical delay portion 332;
FIG. 5D is a diagram showing the time waveforms of two optical differential signals (c) and (d);
FIG. 6A is a diagram showing the configuration of a transmission system 6 of a sixth embodiment of the present invention;
FIG. 6B is a diagram showing the time waveform of a pulse train (a) output from a pulse train generating portion 132 and an optically angle modulated signal (a) that is transmitted on the optical transmission path 200;
FIG. 6C is a diagram showing the time waveform of one optical signal (a') that is output from an optical splitting portion 331 and an optical signal (b) that is output from an optical delay portion 332;
FIG. 6D is a diagram showing the time waveform of a first differential pulse train (c) and a second differential pulse train (d);
FIG. 6E is a diagram showing the time waveform of a first differential pulse train (c) and a second differential pulse train (e) that are input to a combining portion 345;
FIG. 6F is a diagram showing the time waveform of a bipolar differential pulse train (f) output from the combining portion 345;
FIG. 7 is a diagram showing the configuration of a transmission system 7 of a seventh embodiment of the present invention;
FIG. 8 is a diagram showing the configuration of a transmission system 8 of an eighth embodiment of the present invention;
FIG. 9 is a diagram showing the configuration of a transmission system 9 of a ninth embodiment of the present invention;
FIG. 10 is a diagram showing the configuration of a transmission system 10 of a tenth embodiment of the present invention;
FIG. 11 is a diagram showing the configuration of a transmission system 11 of an eleventh embodiment of the present invention;
FIG. 12 is a diagram showing the configuration of a transmission system 12 of a twelfth embodiment of the present invention;
FIG. 13 is a diagram showing the configuration of a transmission system 13 of a thirteenth embodiment of the present invention;
FIG. 14 is a diagram showing the configuration of a transmission system 14 of a fourteenth embodiment of the present invention;
FIG. 15A is a diagram showing the configuration of a transmission system 10 of a fifteenth embodiment of the present invention;
FIG. 15B is a diagram showing the time waveform of a pulse train (a) output from a first and a second pulse train generating portion 501, 502 and an optically modulated signal (a) transmitted in an optical transmission path 200;
FIG. 15C is a diagram showing the time waveform of a pulse train (b) output from a pulse compressing portion 321 and an optical detecting portion 301;
FIG. 16A is a diagram showing the configuration of a transmission system 16 of a sixteenth embodiment of the present invention;
FIG. 16B is a diagram showing the time waveform of a pulse train (a) output from a first and a second pulse train generating portion 141, 142;
FIG. 16C is a diagram showing the time waveform of a signal (b) output from filter portions 511, 512 and an optically modulated signal (b) transmitted in an optical transmission path 200;
FIG. 16D is a diagram showing the time waveform of a pulse train (b) output from a pulse compressing portion 321 and an optical detecting portion 301;
FIG. 17A is a diagram showing the configuration of a transmission system 17 of a seventeenth embodiment of the present invention;
FIG. 17B is a diagram showing the time waveform of a pulse train (a) output from a first and a second pulse train generating portion 521, 522, and a synthesizing portion 161 and an optically modulated signal (a) that is transmitted on the optical transmission path 200;
FIG. 17C is a diagram showing the time waveform of one optical signal (a') that is output from an optical splitting portion 331 and an optical signal (b) that is output from an optical delay portion 332;
FIG. 17D is a diagram showing the time waveform of two optical differential signals (c) and (d);
FIG. 18A is a diagram showing the configuration of a transmission system 18 of an eighteenth embodiment of the present invention;
FIG. 18B is a diagram showing the time waveform of a pulse train (a) output fromthe first and the second pulse train generating portions 521, 522, and the synthesizing portion 161 and an optically angle modulated signal (a) that is transmitted on the optical transmission path 200;
FIG. 18C is a diagram showing the time waveform of one optical signal (a') that is output from the optical splitting portion 331 and an optical signal (b) that is output from the optical delay portion 332;
FIG. 18D is a diagram showing the time waveform of a first differential pulse train (c) and a second differential pulse train (d);
FIG. 18E is a diagram showing the time waveform of a first differential pulse train (c) and a second differential pulse train (e) that are input to the combining portion 345;
FIG. 18F is a diagram showing the time waveform of a bipolar differential pulse train (f) that is output from the combining portion 345; and
FIG. 19 is a diagram showing the configuration of a conventional transmission system that transmits short pulse trains.

### BEST MODE FOR CARRYING OUT THE INVENTION

### (First Embodiment)

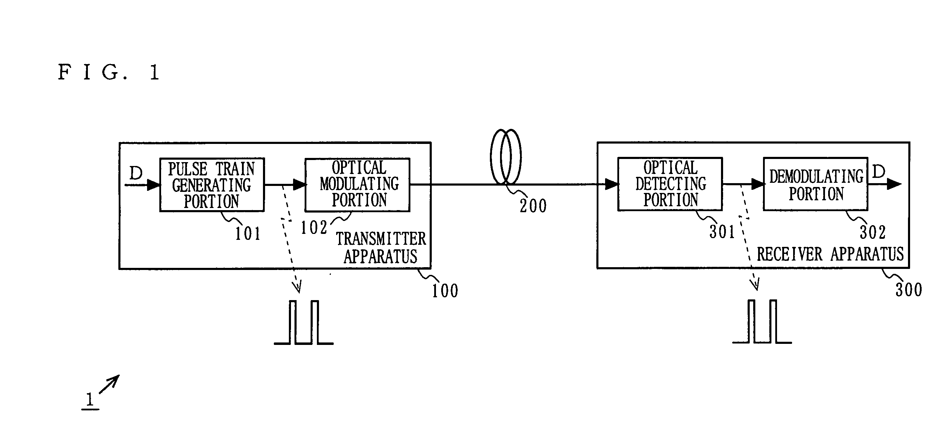

FIG. 1 is a diagram showing the configuration of a transmission system 1 of a first embodiment of the present invention. In FIG. 1, for easy understanding, time waveforms of signals in a relevant portion are shown. In FIG. 1, the transmission system 1 includes a transmitter apparatus 100, an optical transmission path 200, and a receiver apparatus 300. The transmitter apparatus 100 and the receiver apparatus 300 are connected via the optical transmission path 200. The transmitter apparatus 100 includes a pulse train generating portion 101 and an optical modulating portion 102. The receiver apparatus 300 includes an optical detecting portion 301 and a demodulating portion 302.

Next, the operation of the transmission system 1 will be described. A data signal D is input to the pulse train generating portion 101. The pulse train generating portion 101 converts the data signal D to a pulse train, based on a predetermined encoding pattern, and outputs it. The optical modulating portion 102 converts the pulse train that is output from the pulse train generating portion 101 to an optically intensity modulated signal and sends it out to the optical transmission path 200. The optical detecting portion 301 has square detection characteristics and converts the optically intensity modulated signal that is transmitted via the optical transmission path 200 to an electrical signal and outputs it. The demodulating portion 302 extracts the pulse trains from the electrical signal that is output from the optical detecting portion 301, using a decoding pattern that corresponds uniquely to the encoding pattern used in the pulse train generating portion 101, and demodulates the data signal D.

The modulation type of the pulse trains used in the pulse train generating portion 101 is a pulse position modulation type in which a data signal is converted to pulse position information based on an encoding pattern that is predetermined corresponding to the data signal. The pulse train generating portion 101 further reduces the pulse width of a pulse train to spread the frequency spectrum to a wider band, and thus power peaks of pulse trains can be suppressed. Therefore, the disturbance level that may affect to other pulse trains can be reduced. Furthermore, the interference robustness can be improved by assigning a specific encoding/decoding pattern corresponding to each data signal. More specifically, UWB signals are used as the pulse trains.

Thus, according to the first embodiment, a data signal is converted to a pulse train, based on the encoding pattern that is predetermined uniquely corresponding to the data signal, and converted to an optical signal, and then optically transmitted, the received optical signal is converted to a pulse train, and the data signal is demodulated from the pulse train, based on the decoding pattern that uniquely corresponds to the encoding pattern. Therefore, pulse trains can be transmitted in a long distance without being affected by the characteristics of the transmission path, compared with the transmission of the pulse trains in an electrical transmission path.

### (Second Embodiment)

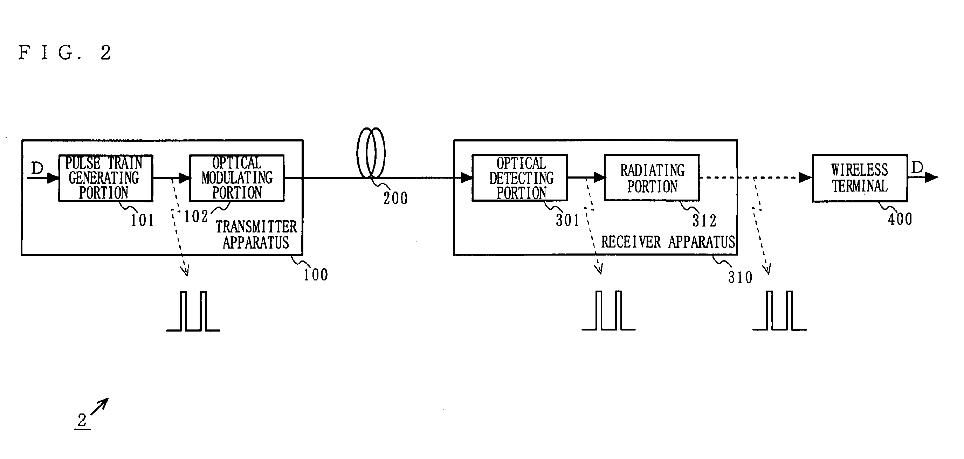

FIG. 2 is a diagram showing the configuration of a transmission system 2 of a second embodiment of the present invention. In FIG. 2, for easy understanding, time waveforms of signals in a relevant portion are shown. In FIG. 2, the transmission system 2 includes a transmitter apparatus 100, an optical transmission path 200, a receiver apparatus 310 and a wireless terminal 400. The transmitter apparatus 100 and the receiver apparatus 310 are connected via the optical transmission path 200. The transmitter apparatus 100 includes a pulse train generating portion 101 and an optical modulating portion 102. The receiver apparatus 310 includes an optical detecting portion 301 and a radiating portion 312. In FIG. 2, the block having the same function as in the first embodiment bears the same referential numerals, and description thereof will be omitted.

Next, the operation of the transmission system 2 will be described. The configuration of this embodiment is similar to that of the first embodiment (see FIG. 1) described above, and therefore only different aspects will be described below. The radiating portion 312 converts an electrical signal that has been converted by the optical detecting portion 301 to a wireless signal and radiates it. The wireless terminal 400 receives the radiated wireless signal, and converts the received wireless signal to an electrical signal using a decoding pattern that uniquely corresponds to the encoding pattern used in the pulse train generating portion 101 to extract the data signal D.

Thus, according to the second embodiment, a data signal is converted to a pulse train, based on the encoding pattern that is predetermined uniquely corresponding to the data signal, and converted to an optical signal, and then optically transmitted, the received optical signal is converted to a pulse train, and radiates it as a wireless signal, and thus the data signal is demodulated from the wireless signal, based on the decoding pattern that uniquely corresponds to the encoding pattern. Therefore, pulse trains can be transmitted in a long distance without being affected by the characteristics of the transmission path, compared with the transmission of the pulse trains in an electrical transmission path.

### (Third Embodiment)

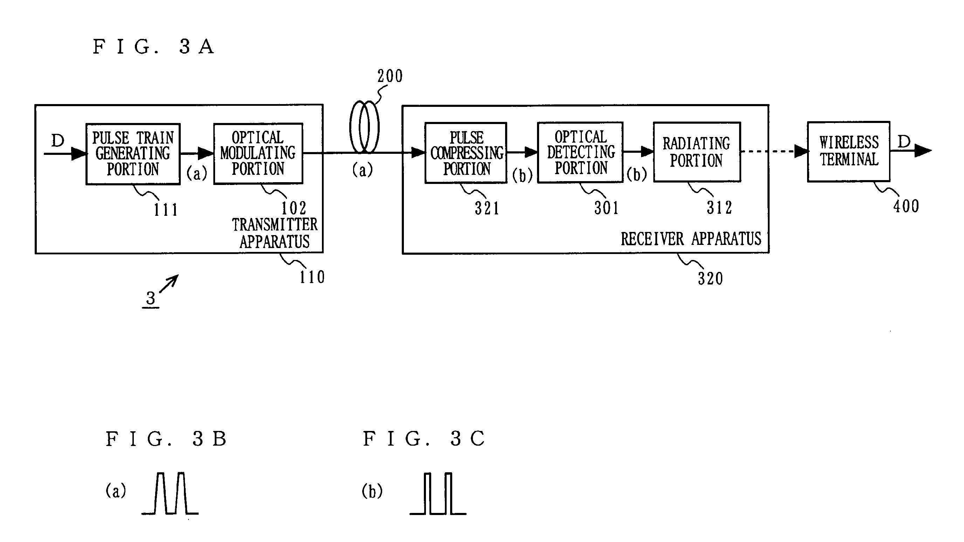

FIG. 3A is a diagram showing the configuration of a transmission system 3 of a third embodiment of the present invention. In FIG. 3A, the transmission system 3 includes a transmitter apparatus 110, an optical transmission path 200, a receiver apparatus 320 and a wireless terminal 400. The transmitter apparatus 110 and the receiver apparatus 320 are connected via the optical transmission path 200. The transmitter apparatus 110 includes a pulse train generating portion 111 and an optical modulating portion 102. The receiver apparatus 320 includes a pulse compressing portion 321, an optical detecting portion 301 and a radiating portion 312. In FIG. 3A, the block having the same function as in the first or the second embodiment bears the same referential number and description thereof will be omitted.

Next, the operation of the transmission system 3 will be described. The configuration of this embodiment is similar to the configurations of the first and the second embodiments (see FIGS. 1 and 2) described above, and therefore only different aspects will be described below.

The pulse train generating portion 111 converts an input data signal D to a pulse train, using a predetermined encoding pattern and outputs it. The pulse train that is output from the pulse train generating portion 101 in the first embodiment was a square pulse train in which its rising portion and its falling portion are significantly sharp (stepwise). However, the pulse train that is output by the pulse train generating portion 111 is a pulse train in which its rising portion and its falling portion have a somehow moderate slope, which is different from that of the first embodiment. Hereinafter, such a pulse is referred to as "trapezoidal pulse". FIG. 3B is a diagram showing the time waveform of a pulse train (a) that is output from the pulse train generating portion 111 and an optically modulated signal (a) that is transmitted on the optical transmission path 200. As shown inFIG. 3B, thepulsetrain (a) output from the pulse train generating portion 111 and the optically modulated signal (a) transmitted on the optical transmission path 200 are trapezoidal pulses.

The pulse train that is output from the pulse train generating portion 111 is converted to an optically intensity modulated signal by the optical modulating portion 102 and is sent out to the optical transmission path 200. The pulse compressing portion 321 receives an optically modulated signal that is transmitted via the optical transmission path 104, and compresses the modulation information (pulse width) thereof, that is, reduces the rising time and/or falling time of the modulation information, and outputs it. FIG. 3C is a diagram showing the time waveform of a pulse train (b) that is output from the pulse compressing portion 321 and the optical detecting portion 301. As shown in FIG. 3C, the pulse train (b) that is output from the pulse compressing portion 321 and the optical detecting portion 301 is a square pulse in which its pulse width is reduced.

For the pulse compressing portion 321, for example, a commonly used vehicle having wavelength dispersion characteristics such as single mode optical fibers can be used. For the optical modulating portion 102, a directly optical modulation scheme in which the current injected to a semiconductor laser is directly modulated is used. That is to say, the pulse compressing portion 321 compresses the modulation information, using the interaction between the property (wavelength sharpness) that the optical frequency (wavelength) is varied and the wavelength dispersion in the optically intensity modulated signal generated by the directly optical modulation scheme, so that the pulse width of the pulse train that is output from the optical detecting portion 105 is reduced.

Thus, according to the third embodiment, the pulse width of a transmission signal is reduced by using optical signal processing after optical transmission. Therefore, the frequency spectrum of the pulse train can be enlarged without increasing the bandwidth necessary for the transmitter apparatus and the transmission path, and thus the interference robustness can be increased.

In the third embodiment, a system in which wireless signals are radiated from the radiating portion 312, and demodulated in a wireless terminal has been described. However, a system as described in the first embodiment in which an electrical signal that is output from the optical detecting portion is demodulated in a demodulating portion without being radiated as a wireless signal can be configured.

### (Fourth Embodiment)

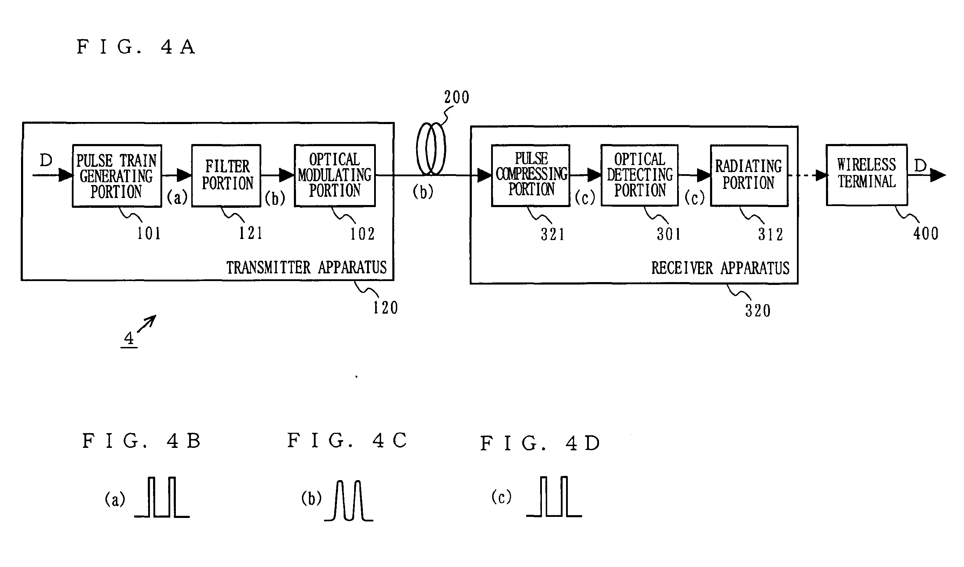

FIG. 4A is a diagram showing the configuration of a transmission system 4 of a fourth embodiment of the present invention. In FIG. 4A, the transmission system 4 includes a transmitter apparatus 120, an optical transmission path 200, a receiver apparatus 320 and a wireless terminal 400. The transmitter apparatus 120 and the receiver apparatus 320 are connected via the optical transmission path 200. The transmitter apparatus 120 includes a pulse train generating portion 101, a filter portion 121 and an optical modulating portion 102. The receiver apparatus 320 includes a pulse compressing portion 321, an optical detecting portion 301 and a radiating portion 312. In FIG. 4A, the block having the same function as in the first or the third embodiment bears the same referential number and description thereof will be omitted.

Next, the operation of the transmission system 4 will be described. The configuration of this embodiment is similar to the configurations of the first and the third embodiments (see FIGS. 1 and 3) described above, and therefore only different aspects will be described below.

The filter portion 121 limits the band with respect to the pulse train (a) (see FIG. 4B) that is output from the pulse train generating portion 101 so that the pulse width of the pulse train is increased, that is, the rising time and the falling time are increased, and outputs it. FIG. 4C is a diagram showing the time waveform of an electric signal (b) that is output from the filter portion and a modulated signal (b) that is transmitted on the optical transmission path 200.

The pulse compressing portion 321 receives an optically modulated signal that is transmitted via the optical transmission path 104, and compresses the modulation information (pulse width) thereof, that is, reduces the rising time and/or falling time of the modulation information, and outputs it. FIG. 4D is a diagram showing the time waveform of a pulse train (c) that is output from the pulse compressing portion 321 and the optical detecting portion 301.

Thus, according to the fourth embodiment, the pulse width of a transmission signal is increased before optical transmission, and then is reduced back in the pulse compressing portion after the optical transmission, so that a wide band wireless signal having high interference robustness can be transmitted with high quality while the bandwidth necessary for the transmitter apparatus and the transmission path is reduced.

In the fourth embodiment, a system in which wireless signals are radiated from the radiating portion 312, and demodulated in a wireless terminal has been described. However, a system as described in the first embodiment in which an electrical signal that is output from the optical detecting portion is demodulated in a demodulating portion without being radiated as a wireless signal can be configured.

### (Fifth Embodiment)

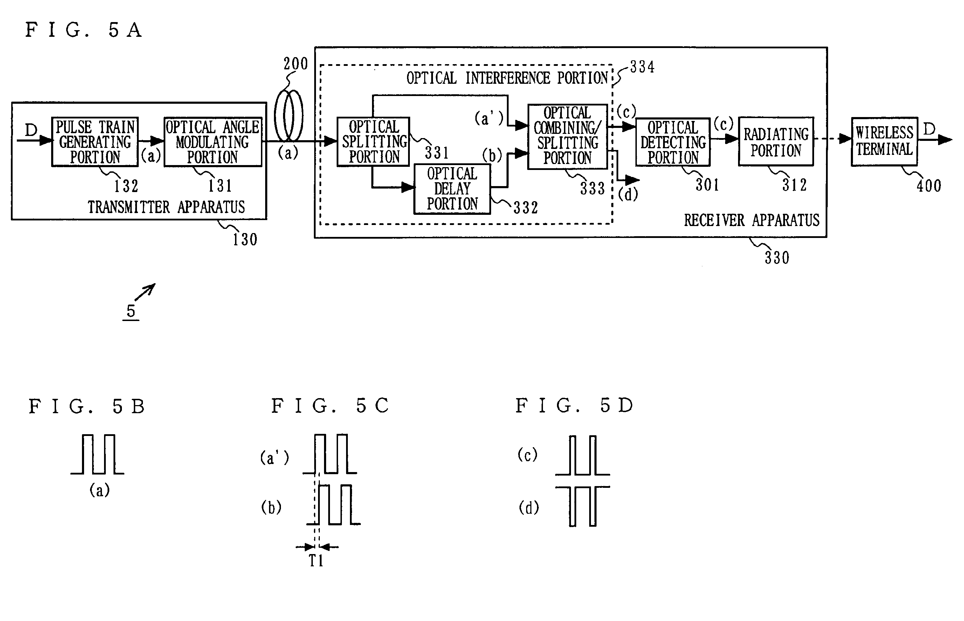

FIG. 5A is a diagram showing the configuration of a transmission system 5 of a fifth embodiment of the present invention. In FIG. 5A, the transmission system 5 includes a transmitter apparatus 130, an optical transmission path 200, a receiver apparatus 330 and a wireless terminal 400. The transmitter apparatus 130 and the receiver apparatus 330 are connected via the optical transmission path 200. The transmitter apparatus 130 includes a pulse train generating portion 132 and an optical angle modulating portion 131. The receiver apparatus 330 includes an optical splitting portion 331, an optical delay portion 332, an optical combining/splitting portion 333, an optical detecting portion 301 and a radiating portion 312. The optical splitting portion 331, the optical delay portion 332, and the optical combining/splitting portion 333 constitute an optical interference portion 334. In FIG. 5A, the block having the same function as in the first or the second embodiment bears the same referential number and description thereof will be omitted.

Next, the operation of the transmission system 5 will be described. The configuration of this embodiment is similar to the configurations of the first and the second embodiments (see FIGS. 1 and 2) described above, and therefore only different aspects will be described below.

The pulse train generating portion 132 converts an input data signal D to a pulse train having a wider pulse width than that of the pulse train that is output from the pulse train generating portion 101 in the first embodiment, using a predetermined encoding pattern, and outputs it. The optical angle modulating portion 131 converts the pulse train that is output from the pulse train generating portion 101 to an optically angle modulated signal and sends it out to the optical transmission path 200. FIG. 5B is a diagram showing the time waveform of a pulse train (a) that is output from the pulse train generating portion 132 and an optically angle modulated signal (a) that is transmitted on the optical transmission path 200. As shown in FIG. 5B, the pulse width of the pulse train (a) that is output from the pulse train generating portion 132 and the optically angle modulated signal (a) that is transmitted on the optical transmission path is wider than that in the first embodiment.

The optical splitting portion 331 splits the optically angle modulated signal transmitted via the optical transmission path, and one of the optical signals is input to the optical delay portion 332, and the other optical signal is input to the optical combining/splitting portion 333. The optical delay portion 332 supplies a predetermined propagation delay amount T1 to the input optical signal, and then inputs it to the optical combining/splitting portion 333. FIG. 5C is a diagram showing the time waveforms of one optical signal (a') that is output from the optical splitting portion 331 and an optical signal (b) that is output from the optical delay portion 332. As shown in FIG. 5C, the optical signal (b) that is output from the optical delay portion 332 is delayed by T1 from the optical signal (a').

The optical combining/splitting portion 333 combines the two optical signals that are input and splits it again. Thus, the optical combining/splitting portion 333 outputs individually two optically intensity modulated signals that correspond to differential components of the modulated signals (pulse trains) of the optically angle modulated signals and have modulated signals of opposite polarities to each other (hereinafter, referred to as "optical differential signals") (c) and (d). FIG. 5D is a diagram showing the time waveforms of the two optical differential signals (c) and (d). The optical detecting portion 301 reconverts the optical differential signal (c) to a differential pulse train, which is an electrical signal, and outputs it. As shown in FIG. 5D, the optical differential signal (c) that is output from the optical detecting portion 301 is a signal of a pulse train having a reduced width.

It should be noted that the optical delay amount T1 that is supplied in the optical delay portion 332 is set to be smaller than one bit width of the pulse train that is output from the pulse train generating portion 132.

Thus, according to the fifth embodiment, unipolar short pulse trains can be generated, using optical signal processing, so that the interference robustness of wireless signals can be increased by increasing the frequency spectrum of the pulse train without increasing the bandwidth necessary for the transmitter apparatus and the transmission path.

In the fifth embodiment, the optical delay portion delays one of the optically angle modulated signals that are output from the optical splitting portion. However, two optical delay portions can be inserted so that both optically angle modulated signals can be delayed. Also in this case, the delay amounts of the two optical delay portions can be determined such that the time difference between the two optically angle modulated signals that are input to the optical combining/splitting portion corresponds to the optical delay amount T1.

In the fifth embodiment, a system in which wireless signals are radiated from the radiating portion 312, and demodulated in a wireless terminal has been described. However, a system as described in the first embodiment in which an electrical signal that is output from the optical detecting portion is demodulated in a demodulating portion without being radiated as a wireless signal can be configured.

### (Sixth Embodiment)

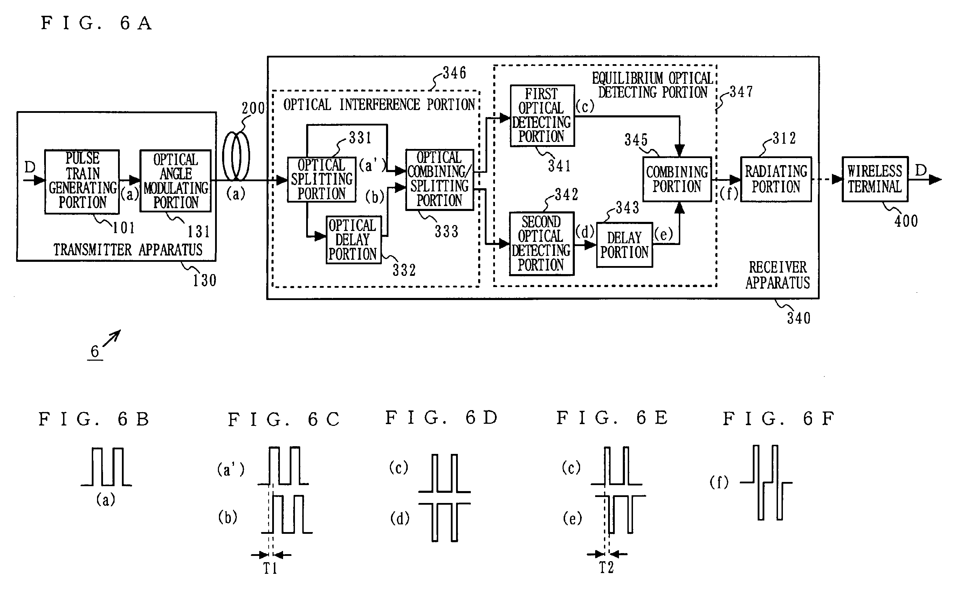

FIG. 6A is a diagram showing the configuration of a transmission system 6 of a sixth embodiment of the present invention. In FIG. 6A, the transmission system 6 includes a transmitter apparatus 130, an optical transmission path 200, a receiver apparatus 340 and a wireless terminal 400. The transmitter apparatus 130 and the receiver apparatus 340 are connected via the optical transmission path 200. The transmitter apparatus 130 includes a pulse train generating portion 132 and an optical angle modulating portion 131. The receiver apparatus 340 includes an optical interference portion 346, an optical balance detecting portion 347 and a radiating portion 312. The optical interference portion 346 has an optical splitting portion 331, an optical delay portion 332, and an optical combining/splitting portion 333. The optical balance detecting portion 347 has a first optical detecting portion 341, a second optical detecting portion 342, a delay portion 343 and a combining portion 345. In FIG. 6A, the block having the same function as in the fifth embodiment bears the same referential number and description thereof will be omitted.

Next, the operation of the transmission system 6 will be described. The configuration of this embodiment is similar to the configuration of the fifth embodiments (see FIG. 5), and therefore description of the same portions will be simplified. The pulse train generating portion 132 converts an input data signal D to a pulse train (a) having a wider pulse width, using a predetermined encoding pattern, and outputs it (see FIG. 6B). The optical angle modulating portion 131 converts the pulse train that is output from the pulse train generating portion 101 to an optically angle modulated signal and sends it out to the optical transmission path 200.

The optical splitting portion 331 splits the optically angle modulated signal that is transmitted via the optical transmission path, and one optical signal (a') (see FIG. 6C) is input to the optical delay portion 332, and the other optical signal is input to the optical combining/splitting portion 333 . The optical delay portion 332 inputs an optical signal (b) (see FIG. 6C) that is obtained by supplying a predetermined propagation delay amount T1 to the input optical signal to the optical combining/splitting portion 333.

The optical combining/splitting portion 333 splits the two optical signals that are input into two optical differential signals. The first optical detecting portion 341 reconverts one of the optical differential signals that are output fromthe optical combining/splitting portion 333 to a first differential pulse train (c), which is an electrical signal, and outputs it. The second optical detecting portion 342 reconverts the other optical differential signal that is output from the optical combining/splitting portion 333 to a second differential pulse train (d), which is an electrical signal, and outputs it. FIG. 6D is a diagram showing the time waveforms of the first differential pulse train (c) and the second differential pulse train (d).

The delay portion 343 outputs a second pulse train (e) to which a predetermined propagation delay amount T2 has been supplied to the second differential pulse train (d) that is output from the second optical detecting portion 342. The combining portion 345 combines the first differential pulse train (c) from the first optical detecting portion 341 and the second differential pulse train (e) supplied with the predetermined propagation delay amount T2 from the delay portion 343, so as to generate and output a bipolar differential pulse train (f). FIG. 6E is a diagram showing the time waveforms of the first differential pulse train (c) and the second differential pulse train (e) that are input to the combining portion 345. FIG. 6F is a diagram showing the time waveform of the bipolar differential pulse train (f) that is output from the combining portion 345.

The optical delay amount T1 that is supplied in the optical delay portion 332 is set to be smaller than one bit width of the pulse train. The electrical delay amount T2 that is supplied in the delay portion 343 is preferably equal to the optical delay amount T1.

Thus, according to the sixth embodiment, bipolar short pulse trains can be generated, using optical signal processing, so that the interference robustness of wireless signals can be increased by increasing the frequency spectrum of the pulse train without increasing the bandwidth necessary for the transmitter apparatus and the transmission path.

In the sixth embodiment, the optical delay portion delays one of the optically angle modulated signals that are output from the optical splitting portion. However, two optical delay portions can be inserted so that both optically angle modulated signals can be delayed. Also in this case, the delay amounts of the two optical delay portions can be determined such that the time difference between the two optically angle modulated signals that are input to the optical combining/splitting portion corresponds to the optical delay amount T1.

In the sixth embodiment, only the second differential pulse that is output from the second optical detecting portion is delayed. However, two optical delay portions can be inserted so that both of the first and the second differential pulses can be delayed. Also in this case, the delay amounts of the two optical delay portions can be determined such that the time difference between the first and the second differential pulses that are input to the combining portion corresponds to the optical delay amount T2.

In the sixth embodiment, a system in which wireless signals are radiated from the radiating portion 312, and demodulated in a wireless terminal has been described. However, a system as described in the first embodiment in which an electrical signal that is output from the optical detecting portion is demodulated in a demodulating portion without being radiated as a wireless signal can be configured.

### (Seventh Embodiment)

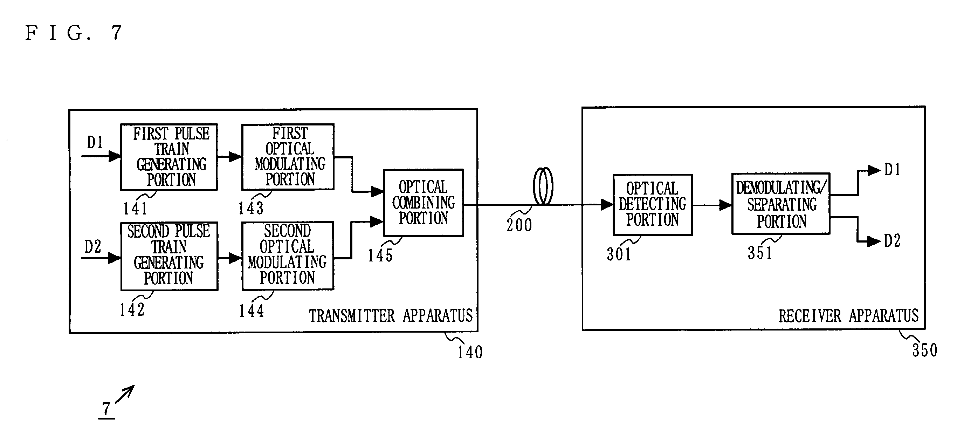

FIG. 7 is a diagram showing the configuration of a transmission system 7 of a seventh embodiment of the present invention. In FIG. 7, the transmission system 7 includes a transmitter apparatus 140, an optical transmission path 200, and a receiver apparatus 350. The transmitter apparatus 140 and the receiver apparatus 350 are connected via the optical transmission path 200. The transmitter apparatus 140 includes a first pulse train generating portion 141, a second pulse train generating portion 142, a first optical modulating portion 143, a second optical modulating portion 144 and an optical combining portion 145. The receiver apparatus 350 includes an optical detecting portion 301 and a demodulating/separating portion 351.

Next, the operation of the transmission system 7 will be described. The first pulse train generating portion 141 converts an input first data signal D1 to a first pulse train, based on a first encoding pattern that is predetermined corresponding to the data signal, and outputs it. The second pulse train generating portion 142 converts an input second data signal D2 to a second pulse train, based on a second encoding pattern that is different fromthe first encoding pattern that is predetermined corresponding to the data signal, and outputs it. The first and the second optical modulating portions 143 and 144 are provided corresponding to the first and the second pulse trains, and converts the pulse trains to optically modulated signals, respectively, and outputs them. The optical combining portion 145 combines the optically modulated signals that are output from the first and the second optical modulating portions 143 and 144, and sends it out to the optical transmission path 200. The optical detecting portion 301 has square detection characteristics and reconverts the optically modulated signal that is transmitted via the optical transmission path 200 to an electrical signal and outputs it. The demodulating/separating portion 351 demodulates selectively an electrical signal that is output from the optical detecting portion 301, based on the decoding pattern that uniquely corresponds to the first and/or the second encoding pattern to obtain a pulse train, and extracts the first data signal D1 and/or the second data signal D2 and outputs it.

The modulation type of the pulse trains used in the first and the second pulse train generating portions 141 and 142 is a pulse position modulation type in which a data signal is converted to pulse position information based on an encoding pattern that is predetermined corresponding to the data signal. The first and the second pulse train generating portions 141 and 142 further reduces the pulse width of a pulse train to spread the frequency spectrum to a wider band, and thus power peaks of pulse trains can be suppressed. Therefore, the disturbance level that may affect to other pulse trains at the time of combination or multiplexing with the other pulse trains can be reduced. Furthermore, the interference robustness can be improved by assigning a specific encoding/decoding pattern corresponding to each data signal, so that a plurality of pulse trains can be multiplexed in non-synchronization.

When multiplexing at least three data signals, the following configuration is possible. A plurality of pulse train generating portions and optical modulating portions are provided, an encoding pattern and a decoding pattern that are different between data signals are assigned to each data signal, pulse trains are generated in the pulse train generating portions, converted to optically modulated signals in the optical modulating portions, combined in the optical combining portion and optically transmitted. In this case, similarly to the case of two data signals, the demodulating/separating portion demodulates selectively an electrical signal that is output from the optical detecting portion, using a decoding pattern, to extract each data signal and outputs it.

Thus, according to the seventh embodiment, a plurality of data signals are converted to pulse trains, based on encoding patterns that are different from each other and are predetermined corresponding to the plurality of data signals, and the pulse trains are converted to optically modulated signals, combined and then optically transmitted. Thereafter, the optically transmitted optical signals are converted to electrical signals, and a desired data signal is demodulated selectively, using a decoding pattern that uniquely corresponds to the encoding pattern used in the transmitter apparatus, and thus extracted. Therefore, quality deterioration due to the interference between the data signals can be prevented and a plurality of data signals can be multiplexed and accommodated with high quality and in a simple manner without requiring a synchronous procedure between the plurality of data signals.

It should be noted that the electrical signal that is output from the optical detecting portion 301 may be radiated as a radio wave, using the radiating portion. In this case, the wireless terminal that has received the ratio wave extracts a desired data signal, using the demodulating/separating portion.

### (Eight Embodiment)

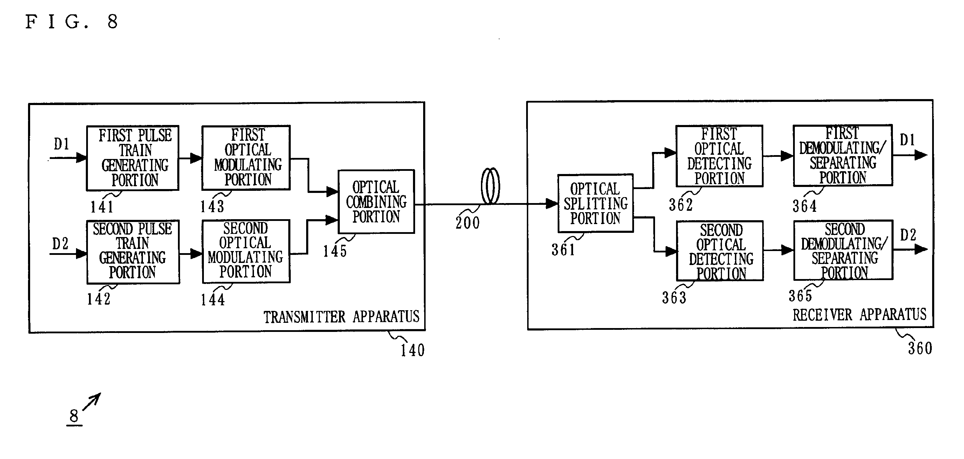

FIG. 8 is a diagram showing the configuration of a transmission system 8 of an eighth embodiment of the present invention. In FIG. 8, the transmission system 8 includes a transmitter apparatus 140, an optical transmission path 200, and a receiver apparatus 360. The transmitter apparatus 140 and the receiver apparatus 360 are connected via the optical transmission path 200. The transmitter apparatus 140 includes a first pulse train generating portion 141, a second pulse train generating portion 142, a first optical modulating portion 143, a second optical modulating portion 144 and an optical combining portion 145. The receiver apparatus 360 includes an optical splitting portion 361, a first optical detecting portion 362, a second optical detecting portion 363, a first demodulating/separating portion 364, and a second demodulating/separating portion 365. In FIG. 8, the block having the same function as in the seventh embodiment bears the same referential number and description thereof will be omitted.

Next, the operation of the transmission system 8 will be described. The configuration of this embodiment is similar to that of the seventh embodiment (see FIG. 7) described above, and therefore only different aspects will be described below. The optical splitting portion 361 splits the optically modulated signal that is transmitted via the optical transmission path 200 into a plurality of signals (two in FIG. 8) and outputs them. The first and the second optical detecting portions 362 and 363 are provided, corresponding to the optically modulated signals that are split by the optical splitting portion 361, and reconvert the respective optically modulated signals to electrical signals and output them. The first and the second demodulating/separating portion 364 and 365 are provided, corresponding to the electrical signals that are output from the first and the second optical detecting portions 362 and 363, and demodulate selectively the electrical signals, based on the decoding patterns that uniquely correspond to the first and the second encoding patterns, extract a first data signal D1 and a second data signal D2, respectively, and output them.

When multiplexing at least three data signals, the following configuration is possible. A plurality of pulse train generating portions and optical modulating portions are provided, an encoding pattern and a decoding pattern that are different between data signals are assigned to each data signal, pulse trains are generated in the pulse train generating portions, converted to optically modulated signals in the optical modulating portions, combined in the optical combining portion and optically transmitted. In this case, the optical splitting portion splits an input optically modulated signal into a plurality of signals and the split optically modulated signals are detected in the respective optical detecting portions, and are demodulated selectively, using a decoding pattern, to extract each data signal.

Thus, according to the eighth embodiment, a plurality of data signals are converted to pulse trains, and converted to optically modulated signals, and then combined and optically transmitted. Thereafter, on the receiver side, optical demultiplexing is performed to convert each optical signal to an electrical signal, and each data signal is demodulated and extracted. Therefore, quality deterioration due to the interference between the data signals can be prevented and multiplex transmission of a plurality of data signals can be realized with high quality and in a simple manner without requiring a synchronous procedure between the plurality of data signals.

It should be noted that the electrical signal that is output from each optical detecting portion may be radiated as a radio wave, using the radiating portion. In this case, the wireless terminal that has received the ratio wave extracts a desired data signal, using the demodulating/separating portion.

### (Ninth Embodiment)

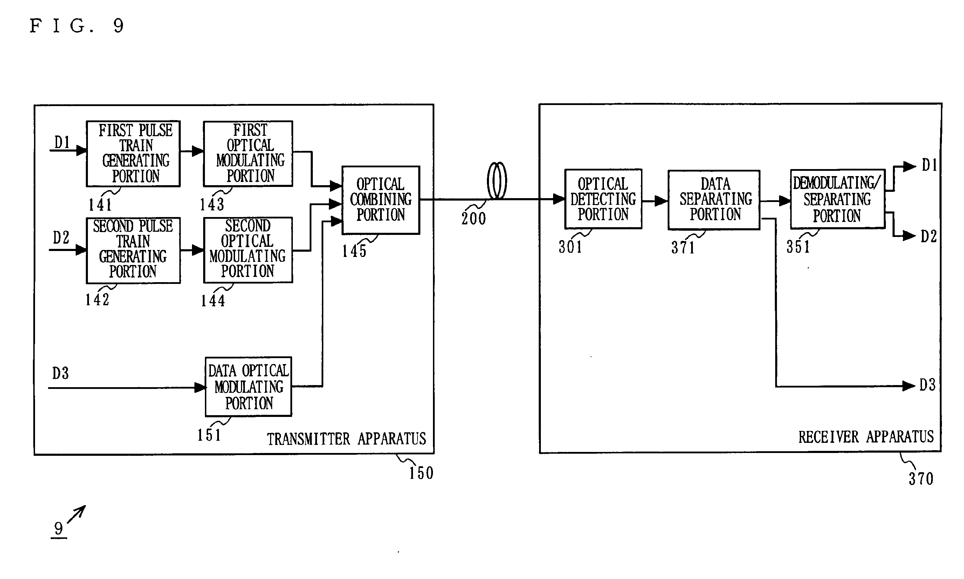

FIG. 9 is a diagram showing the configuration of a transmission system 9 of a ninth embodiment of the present invention. In FIG. 9, the transmission system 9 includes a transmitter apparatus 150, an optical transmission path 200, and a receiver apparatus 370. The transmitter apparatus 150 and the receiver apparatus 370 are connected via the optical transmission path 200. The transmitter apparatus 150 includes a first pulse train generating portion 141, a second pulse train generating portion 142, a first optical modulating portion 143, a second optical modulating portion 144, an optical combining portion 145 and a data optical modulating portion 151. The receiver apparatus 370 includes an optical detecting portion 301, a data separating portion 371, and a demodulating/separating portion 351. In FIG. 9, the block having the same function as in the seventh embodiment bears the same referential number and description thereof will be omitted. The configuration shown in FIG. 9 is different from the configuration shown in FIG. 7 in that the data optical modulating portion 151 and data separating portion 371 are added.

Next, the operation of the transmission system 9 will be described. The configuration of this embodiment is similar to that of the seventh embodiment (see FIG. 7) described above, and therefore only different aspects will be described below. A third data signal D3 having a lower clock rate than that of the first and the second pulse trains is input to the data optical modulating portion 151. The data optical modulating portion 151 converts the third data signal D3 that has been input to an optically modulated signal and outputs it. The optical combining portion 145 combines optically modulated signals that are output from the first and the second optical modulating portions 143 and 144, and an optically modulated signal that is output from the data optical modulating portions 151 and sends out the result to the optical transmission path 200. The data separating portion 371 separates the third data signal D3 from the electrical signal that is output from the optical detecting portion 301 and outputs it, and outputs other signals to the demodulating/separating portion 351.

When multiplexing at least three data signals, the following configuration is possible. An optical modulating portion is provided, corresponding to each pulse train, and waves are combined in the optical combining portion and then optically transmitted. On the receiver side, at least three pulse trains are selectively demodulated using decoding patterns.

Thus, according to the ninth embodiment, a plurality of data signals are converted to pulse trains, and multiplexed and optically transmitted, while a data signal having a repetitive cycle that is slower than the pulse train is multiplexed, so that multiplex transmission of more data signals can be realized in a simple manner.

It should be noted that the electrical signal that is output from each optical detecting portion may be radiated as a radio wave, using the radiating portion. In this case, the wireless terminal that has received the ratio wave extracts a desired data signal, using the demodulating/separating portion.

### (Tenth Embodiment)

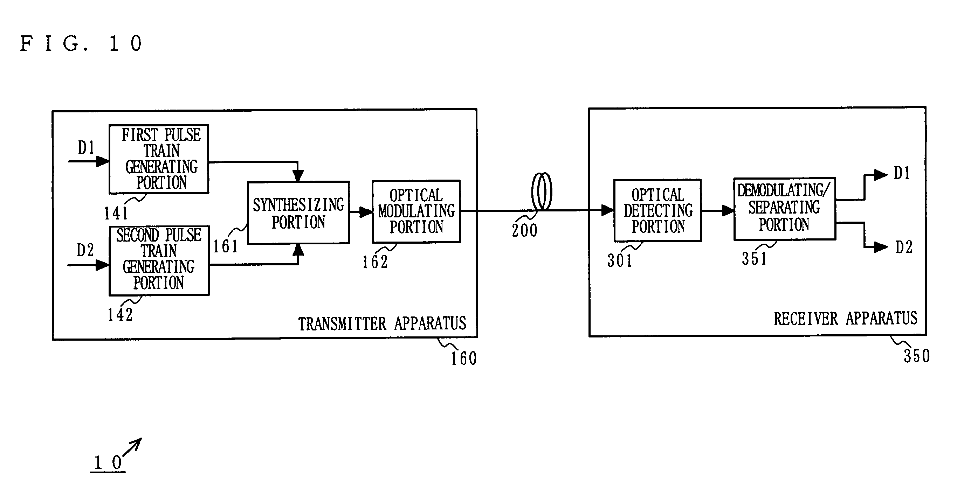

FIG. 10 is a diagram showing the configuration of a transmission system 10 of a tenth embodiment of the present invention. In FIG. 10, the transmission system 10 includes a transmitter apparatus 160, an optical transmission path 200, and a receiver apparatus 350. The transmitter apparatus 160 and the receiver apparatus 350 are connected via the optical transmission path 200. The transmitter apparatus 160 includes a first pulse train generating portion 141, a second pulse train generating portion 142, a synthesizing portion 161, and an optical modulating portion 162. The receiver apparatus 350 includes an optical detecting portion 301 and a demodulating/separating portion 351. In FIG. 10, the block having the same function as in the seventh embodiment bears the same referential number and description thereof will be omitted. The configuration shown in FIG. 10 is different from the configuration shown in FIG. 7 in that the optical combining portion 145 is replaced by the synthesizing portion 161 and the optical modulating portion 162.

Next, the operation of the transmission system 10 will be described. The configuration of this embodiment is similar to that of the seventh embodiment (see FIG. 7) described above, and therefore only different aspects will be described below. The synthesizing portion 161 synthesizes pulse trains output from the first and the second pulse train generating portions 141 and 142 and outputs the result. The optical modulating portion 162 converts the synthesized signal that is output from the synthesizing portion 161 to an optically modulated signal and sends it out to the optical transmission path 104.

When multiplexing at least three data signals, the following configuration is possible. The pulse trains obtained for each data signal are synthesized in the synthesizing portion and modulated in the optical modulating portion. On the receiver side, an electrical signal that is output from the optical detecting portion is selectively modulated, using a decoding pattern, so that each data signal can be extracted.

Thus, according to the tenth embodiment, a plurality of data signals are converted to pulse trains, based on encoding patterns that are different from each other and are predetermined corresponding to the plurality of data signals, and the pulse trains are synthesized, converted to optically modulated signals, and then optically transmitted. Thereafter, the optically transmitted optical signals are converted to electrical signals, and a desired data signal is demodulated selectively, based on the decoding pattern that uniquely corresponds to the encoding pattern used in the transmitter apparatus, and thus extracted. Therefore, quality deterioration due to the interference between the data signals can be prevented and a plurality of data signals can be multiplexed and accommodated with high quality and in a simple manner without requiring a synchronous procedure between the plurality of data signals.

### (Eleventh Embodiment)

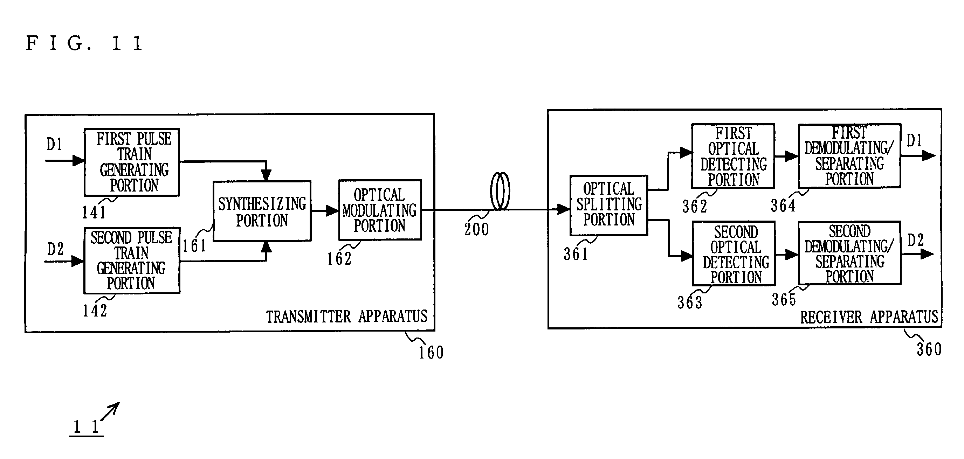

FIG. 11 is a diagram showing the configuration of a transmission system 11 of an eleventh embodiment of the present invention. In FIG. 11, the transmission system 11 includes a transmitter apparatus 160, an optical transmission path 200, and a receiver apparatus 360. The transmitter apparatus 160 and the receiver apparatus 360 are connected via the optical transmission path 200. The transmitter apparatus 160 includes a first pulse train generating portion 141, a second pulse train generating portion 142, a synthesizing portion 161, and an optical modulating portion 162. The receiver apparatus 360 includes an optical splitting portion 361, a first optical detecting portion 362, a second optical detecting portion 363, a first demodulating/separating portion 364, and a second demodulating/separating portion 365. In FIG. 11, the block having the same function as in the eighth or the tenth embodiment bears the same referential number and description thereof will be omitted.

Next, the operation of the transmission system 11 will be described. The configuration of this embodiment is similar to that of the tenth embodiment (see FIG. 10) described above, and therefore only different aspects will be described below. The optical splitting portion 361 splits the optically modulated signal that is transmitted via the optical transmission path 200 into a plurality of signals (two in FIG. 11) and outputs them. The first and the second optical detecting portions 362 and 363 are provided, corresponding to the optically modulated signals that are split by the optical splitting portion 361, and convert the respective optically modulated signals to electrical signals and output them. The first and the second demodulating/separating portion 364 and 365 are provided, corresponding to the electrical signals that are output from the first and the second optical detecting portions 362 and 363, and demodulate selectively the electrical signals, based on the decoding patterns that uniquely correspond to the first and the second encoding patterns, extract a first data signal D1 and a second data signal D2, respectively, and output them.

The configuration for multiplexing at least three data signals is the same as described in the eighth and the tenth embodiments.

Thus, according to the eleventh embodiment, a plurality of data signals are converted to pulse trains and synthesized, converted to optically modulated signals, and then optically transmitted. Thereafter, on the receiver side, optical demultiplexing is performed to convert each optical signal to an electrical signal, and each data signal is demodulated and extracted. Therefore, quality deterioration due to the interference between the data signals can be prevented and multiplex transmission of a plurality of data signals can be realized with high quality and in a simple manner without requiring a synchronous procedure between the plurality of data signals.

It should be noted that the electrical signal that is output from each optical detecting portion may be radiated as a radio wave, using the radiating portion. In this case, the wireless terminal that has received the ratio wave extracts a desired data signal, using the demodulating/separating portion.

### (Twelfth Embodiment)

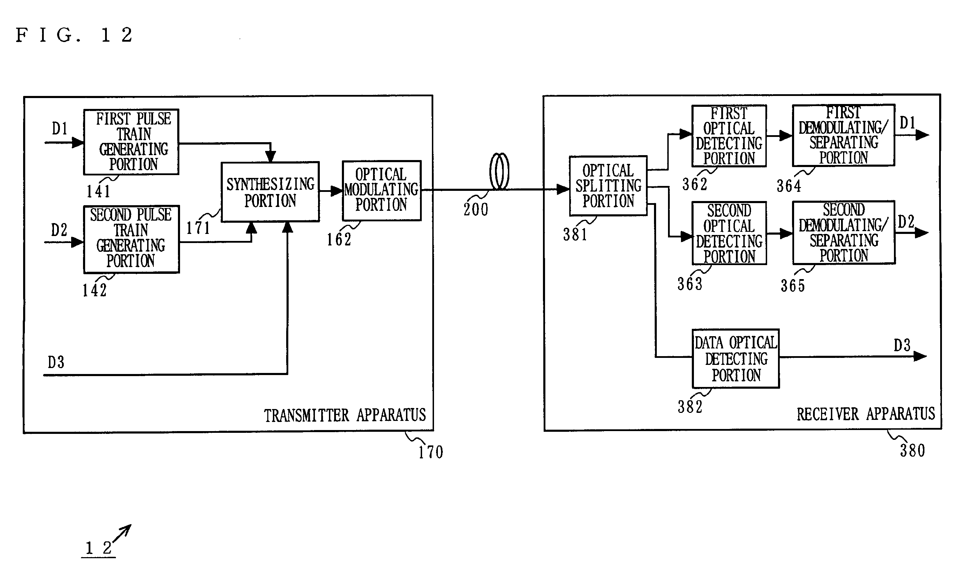

FIG. 12 is a diagram showing the configuration of a transmission system 12 of a twelfth embodiment of the present invention. In FIG. 12, the transmission system 12 includes a transmitter apparatus 170, an optical transmission path 200, and a receiver apparatus 380. The transmitter apparatus 170 and the receiver apparatus 380 are connected via the optical transmission path 200. The transmitter apparatus 170 includes a first pulse train generating portion 141, a second pulse train generating portion 142, a synthesizing portion 171, an optical modulating portion 162. The receiver apparatus 380 includes an optical splitting portion 381, a first optical detecting portion 362, a second optical detecting portion 363, a first demodulating/separating portion 364, a second demodulating/separating portion 365, and a data optical detecting portion 382. In FIG. 12, the block having the same function as in the eleventh embodiment bears the same referential number and description thereof will be omitted. The configuration shown in FIG. 12 is different from the configuration shown in FIG. 11 in that the synthesizing portion 171 synthesizes the third data signal D3, the optical splitting portion 381 splits the signal into three, and the data optical detecting portion 382 are newly added.

Next, the operation of the transmission system 12 will be described. The configuration of this embodiment is similar to that of the eleventh embodiment (see FIG. 11) described above, and therefore only different aspects will be described below. The synthesizing portion 171 synthesizes a first and a second pulse train as well as a third data signal D3 having a lower clock rate than that of the first and the second pulse trains and outputs it to the optical modulating portion 162. The optical splitting portion 381 splits the optical signal that has been transmitted via the optical transmission path 200 to three signals. The data optical detecting portion 382 reconverts one of the optically modulated signals that are split and output from the optical splitting portion 381 to an electrical signal, and separates and outputs the third data signal D3.

When multiplexing at least three data signals, the following configuration is possible. Each pulse train is synthesized in the synthesizing portion, and split into the number corresponding to the number of data signals in the optical splitting portion, converted to an electrical signal in the optical detecting portion, and selectively demodulated using an encoding pattern, in the demodulating/separating portion.

Thus, according to the twelfth embodiment, a plurality of data signals are converted to pulse trains and multiplexed, while a data signal having a repetitive cycle that is slower than the pulse train is multiplexed and transmitted optically, so that multiplex transmission of more data signals can be realized in a simple manner.

It should be noted that the electrical signal that is output from each optical detecting portion may be radiated as a radio wave, using the radiating portion. In this case, the wireless terminal that has received the ratio wave extracts a desired data signal, using the demodulating/separating portion.

### (Thirteenth Embodiment)

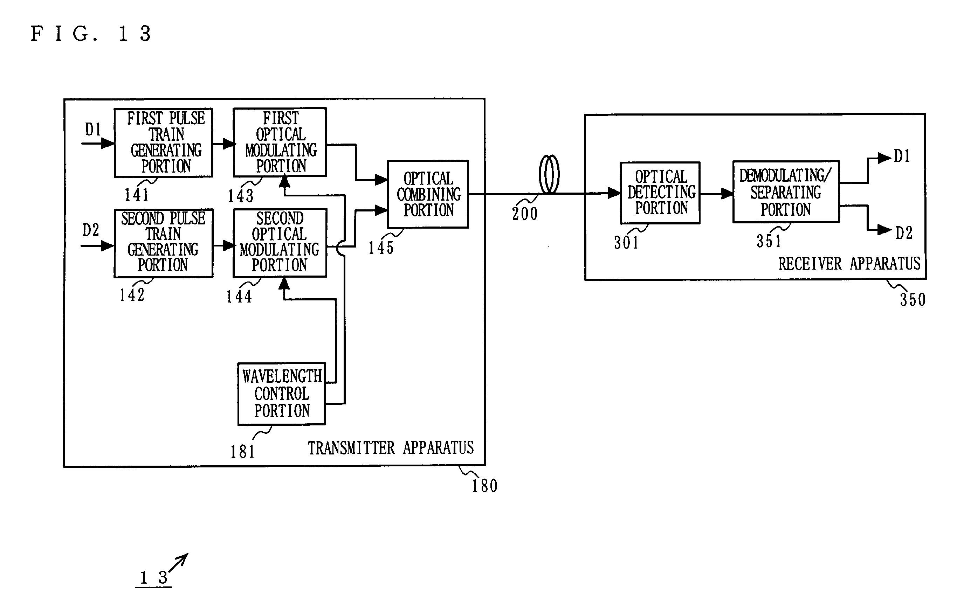

FIG. 13 is a diagram showing the configuration of a transmission system 13 of a thirteenth embodiment of the present invention. In FIG. 13, the transmission system 13 includes a transmitter apparatus 180, an optical transmission path 200, and a receiver apparatus 350. The transmitter apparatus 180 and the receiver apparatus 350 are connected via the optical transmission path 200. The transmitter apparatus 180 includes a first pulse train generating portion 141, a second pulse train generating portion 142, a first optical modulating portion 143, a second optical modulating portion 144, an optical combining portion 145 and a wavelength control portion 181. The receiver apparatus 350 includes an optical detecting portion 301 and a demodulating/separating portion 351. In FIG. 13, the block having the same function as in the seventh embodiment bears the same referential number and description thereof will be omitted. The configuration shown in FIG. 13 is different from the configuration shown in FIG. 7 in that the wavelength control portion 181 is newly added.

Next, the operation of the transmission system 13 will be described. The configuration of this embodiment is similar to that of the seventh embodiment (see FIG. 7) described above, and therefore only different aspects will be described below. The wavelength control portion 181 controls such that the wavelengths of the optically modulated signals that are output from the first and the second optical modulating portions 143 and 144 are stabilized and adjusts such that the wavelengths are different from each other.

Also when multiplexing at least three data signal, the wavelength control portion can be configured to control the wavelength of each optical modulating portion.

Thus, according to the thirteenth embodiment, in the configuration in which a plurality of data signals are converted to pulse trains and converted to optically modulated signals, which are combined and transmitted optically, and then a desired data signal is demodulated selectively and extracted from the received signal, the wavelength of the optically modulated signal is controlled as appropriate, so that quality deterioration due to the interference between the optically modulated signals can be prevented and a plurality of data signals can be multiplexed and accommodated with high quality.

### (Fourteenth Embodiment)

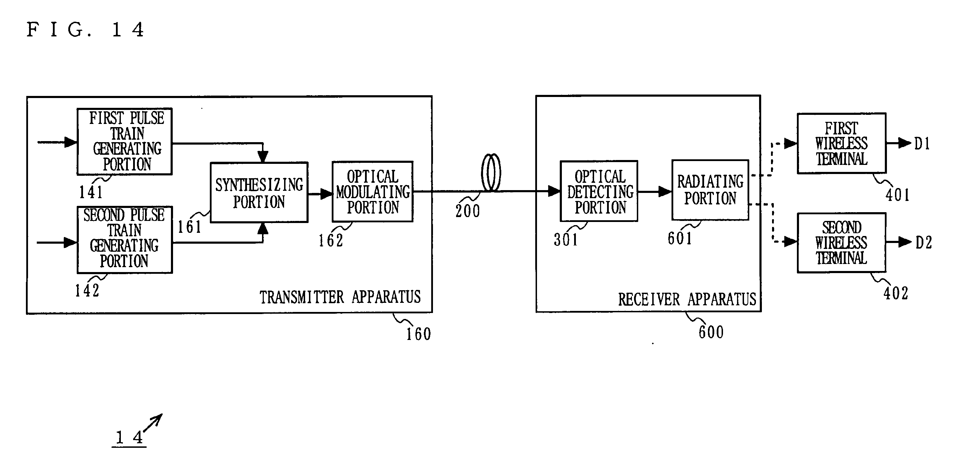

FIG. 14 is a diagram showing the configuration of a transmission system 14 of a fourteenth embodiment of the present invention. In FIG. 14, the transmission system 14 includes a transmitter apparatus 160, an optical transmission path 200, a receiver apparatus 600, a first wireless terminal 401 and a second wireless terminal 402. The transmitter apparatus 160 and the receiver apparatus 600 are connected via the optical transmission path 200. The transmitter apparatus 160 includes a first pulse train generating portion 141, a second pulse train generating portion 142, a synthesizing portion 161, and an optical modulating portion 162. The receiver apparatus 600 includes an optical detecting portion 301 and a radiating portion 601. In FIG. 14, the block having the same function as in the tenth embodiment bears the same referential number and description thereof will be omitted. The configuration shown in FIG. 14 is different from the configuration shown in FIG. 10 in that the demodulating/separating portion 351 is replaced by the radiating portion 601.

Next, the operation of the transmission system 14 will be described. The configuration of this embodiment is similar to that of the tenth embodiment (see FIG. 10) described above, and therefore only different aspects will be described below. The radiating portion 601 amplifies or/and performs waveform-shaping of a synthesized signal that is output from the optical detecting portion 301 and then radiates it as a wireless signal to the space. The first and the second wireless terminals 401 and 402 are provided, corresponding to the first and the second pulse train generating portions 141 and 142, demodulate the wireless signal radiated from the radiating portion 601, based on the decoding pattern that uniquely corresponds to the encoding pattern to extract the first data signal D1 and the second data signal D2, respectively.

Thus, according to the fourteenth embodiment, data signals are converted to pulse trains, based on encoding patterns that are predetermined uniquely corresponding to the data signals, and opticallytransmitted, and then radiated as wireless signals. The signals corresponding to the received signals are demodulated in the wireless terminals, based on the decoding patterns that uniquely correspond to the encoding patterns. Therefore, wide band wireless signals having high interference robustness can be transmitted with high quality, and the capacity can be increased, and more wireless signals (wireless terminals) can be multiplexed and accommodated.

### (Fifteenth Embodiment)

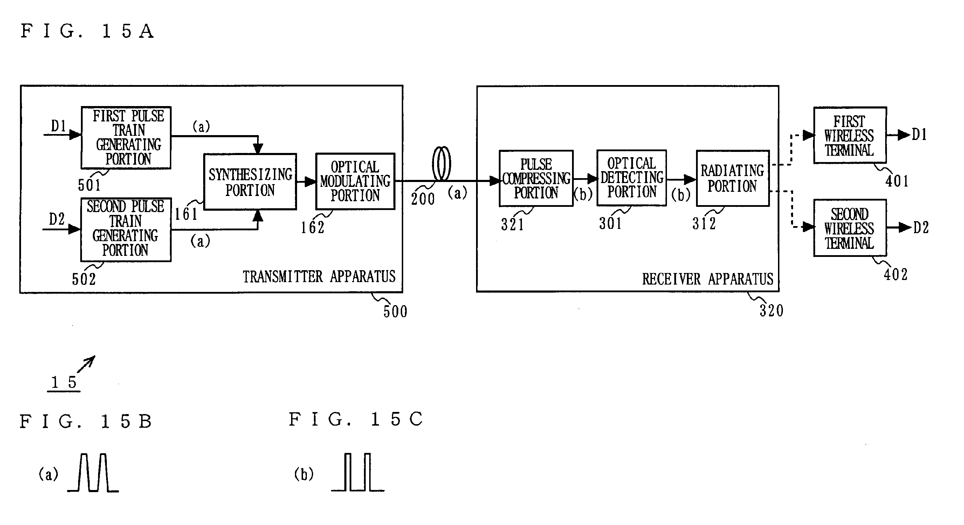

FIG. 15A is a diagram showing the configuration of a transmission system 10 of a fifteenth embodiment of the present invention. In FIG. 15A, the transmission system 15 includes a transmitter apparatus 500, an optical transmission path 200, a receiver apparatus 320, a first wireless terminal 401 and a second wireless terminal 402. The transmitter apparatus 500 and the receiver apparatus 320 are connected via the optical transmission path 200. The transmitter apparatus 500 includes a first pulse train generating portion 501, a second pulse train generating portion 502, a synthesizing portion 161, and an optical modulating portion 162. The receiver apparatus 320 includes a pulse compressing portion 321, an optical detecting portion 301 and a radiating portion 312. In FIG. 15A, the block having the same function as in the third or the fourteenth embodiment bears the same referential number and description thereof will be omitted.

Next, the operation of the transmission system 15 will be described. A data signal D1 is input to the first pulse train generating portion 501. A data signal D2 is input to the second pulse train generating portion 502. The first and the second pulse train generating portions 501 and 502 convert the data signals D1 and D2 to pulse trains (a) in which each pulse is a trapezoidal pulse, using a predetermined encoding pattern and output the pulse trains (see FIG. 15B). The encoding patterns used in the first and the second pulse train generating portions 501 and 502 are different from each other. The synthesizing portion 161 synthesizes the pulse trains output from the first and the second pulse train generating portions 501 and 502 and outputs the result. The optical modulating portion 162 converts the synthesized signal that is output from the synthesizing portion 161 to an optically modulated signal (a) and sends it out to the optical transmission path 200 . The pulse compressing portion 321 receives the optically modulated signal (a) that is transmitted on the optical transmission path 200 and compresses the modulation information thereof (pulse train or synthesized signal), that is, reduces the rising time or/and the falling time of the modulation information and outputs the result (see FIG. 15C).

Thus, according to the fifteenth embodiment, the pulse width of the transmission signal can be reduced, using optical signal processing, after optical transmission. Therefore, the frequency spectrum can be increased without increasing the bandwidth necessary for the transmitter apparatus and the transmission path, and the interference robustness of wireless signals can be further increased, and multiplexing and accommodation of more wireless terminals can be realized.

The pulse compressing portion can be replaced by a wavelength dispersing portion that has wavelength dispersion characteristics, receives an optical intensity modulating signal, compresses the pulse width of a pulse train or a synthesized signal, which is modulation information, or reduces the rising time or/and the falling time and outputs it. In this case, it is preferable that the optical modulating portion uses a direct optical modulating system in which a current injected to a semiconductor is modulated by an input pulse train, and an optically intensity modulated signal is output. Thus, the pulse width with respect to an optical signal can be reduced, utilizing the non-linearity of optical fibers, so that an optical transmission system that transmits with high quality and in a cost efficient manner without using a special device can be realized.

It should be noted that in the fifteenth embodiment, an electrical signal that is detected by the optical detecting portion is radiated as a wireless signal. However, as in the tenth embodiment, the configuration can be such that the receiver apparatus extracts selectively each data signal, using the demodulating/separating portion.

### (Sixteenth Embodiment)

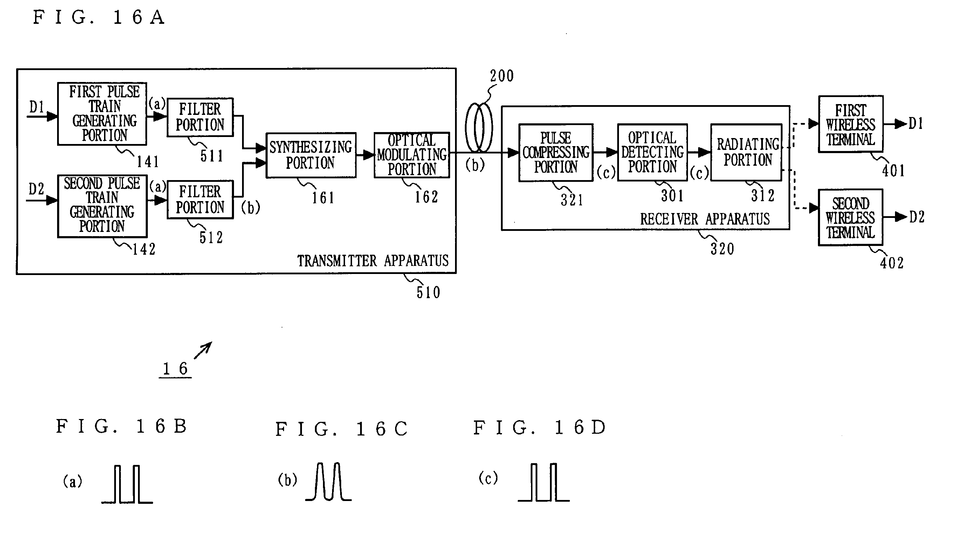

FIG. 16A is a diagram showing the configuration of a transmission system 16 of a sixteenth embodiment of the present invention. In FIG. 16A, the transmission system 16 includes a transmitter apparatus 510, an optical transmission path 200, a receiver apparatus 320, a first wireless terminal 401 and a second wireless terminal 402. The transmitter apparatus 510 and the receiver apparatus 320 are connected via the optical transmission path 200. The transmitter apparatus 510 includes a first pulse train generating portion 141, a second pulse train generating portion 142, filter portions 511 and 512, a synthesizing portion 161, and an optical modulating portion 162. The receiver apparatus 320 includes a pulse compressing portion 321, an optical detecting portion 301 and a radiating portion 312. In FIG. 16A, the block having the same function as in the fourth or the fourteenth embodiment bears the same referential number and description thereof will be omitted.

Next, the operation of the transmission system 16 will be described. The configuration of this embodiment is similar to the configurations of the fourteenth and the fifteenth embodiments (see FIGS. 14 and 15) described above, and therefore only different aspects will be described below. The filter portions 511 and 512 are inserted between the first and the second pulse train generating portions 141 and 142 and the synthesizing portion 161, respectively, to limit the band of the pulse train (a) (see FIG. 16B) that is output from each pulse train generating portion, so that the pulse width is increased, that is, the rising time/falling time is increased and is output (see FIG. 16C). The pulse compressing portion 321 receives an optically modulated signal that is transmitted via the optical transmission path 104, and compresses the modulation information (pulse width) thereof, that is, reduces the rising time and/or the falling time of the modulation information, and outputs it (see FIG. 16D).

Thus, according to the sixteenth embodiment, the pulse width of the transmission signal is increased before optical transmission, and then reduced back after the optical transmission. Therefore, wide band wireless signals having high interference robustness can be transmitted with high quality without increasing the bandwidth necessary for the transmitter apparatus and the transmission path, and multiplexing and accommodation of more wireless terminals can be realized.

The filter portions may be inserted between the synthesizing portion 161 and the optical modulating portion 162.

It should be noted that in the sixteenth embodiment, an electrical signal that is detected by the optical detecting portion is radiated as a wireless signal. However, as in the tenth embodiment, the configuration can be such that the receiver apparatus extracts selectively each data signal, using the demodulating/separating portion.

### (Seventeenth Embodiment)

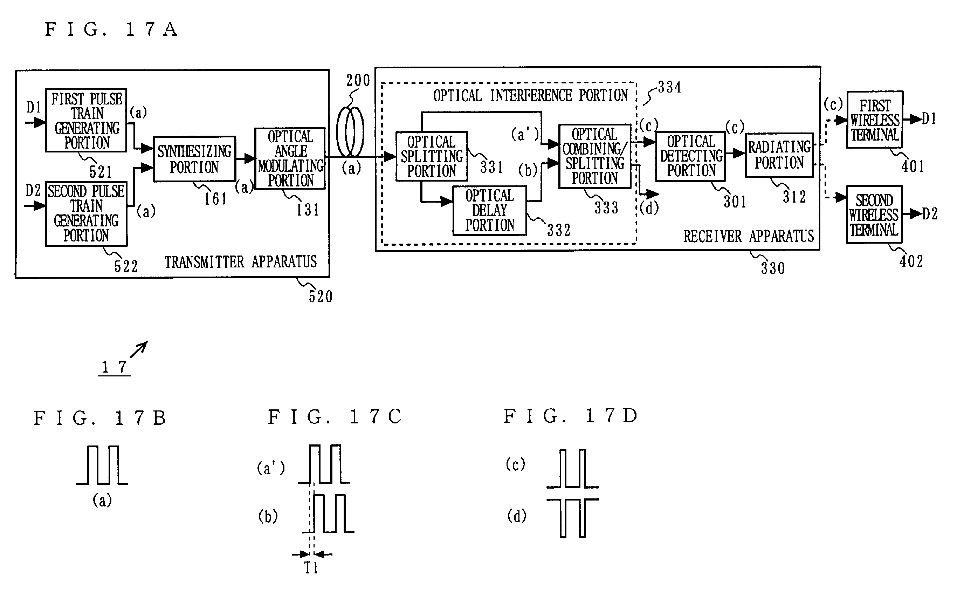

FIG. 17A is a diagram showing the configuration of a transmission system 17 of a seventeenth embodiment of the present invention. In FIG. 17A, the transmission system 17 includes a transmitter apparatus 520, an optical transmission path 200, a receiver apparatus 330, a first wireless terminal 401 and a second wireless terminal 402. The transmitter apparatus 520 and the receiver apparatus 330 are connected via the optical transmission path 200. The transmitter apparatus 520 includes a first pulse train generating portion 521, a second pulse train generating portion 522, a synthesizing portion 161, and an optical angle modulating portion 131. The receiver apparatus 330 includes a pulse splitting portion 331, an optical delay portion 332, an optical combining/splitting portion 333, an optical detecting portion 301 and a radiating portion 312. In FIG. 17A, the block having the same function as in the fifth or the fourteenth embodiment bears the same referential number and description thereof will be omitted.

Next, the operation of the transmission system 17 will be described. The configuration of this embodiment is similar to that of the fifth embodiment (see FIG. 5) described above, and therefore only different aspects will be described below. The first and the second pulse train generating portions 521 and 522 convert input data signals D1 and D2 to a first and a second pulse train, based on predetermined encoding patterns corresponding to the data signals, and output them. The pulse width of the pulse train (a) output from the first and the secondpulsetraingenerating portions 521 and 522 is wider than that of the pulse train output from the first and the second pulse train generating portions 141 and 142 in the seventh embodiment (see FIG. 17B). The synthesizing portion 161 synthesizes the pulse trains output from the first and the second pulse train generating portions 521 and 522 and outputs the result to the optical angle modulating portion 131. Thereafter, the same operations as in the fifth embodiment are performed, so that unipolar short pulse trains are radiated from the radiating portion 312 (see FIGS. 17C and 17D).

Thus, according to the seventeenth embodiment, unipolar short pulse trains can be generated using optical signal processing. Therefore, the frequency spectrum of the pulse trains can be increased without increasing the burden on the transmitter apparatus and the transmission path, and the interference robustness of wireless signals can be further increased, and multiplexing and accommodation of more wireless terminals can be realized.

In the seventeenth embodiment, the optical delay portion delays one of the optically angle modulated signals that are output from the optical splitting portion. However, two optical delay portions may be inserted so as to delay both the optically angle modulated signals. Also in this case, the delay amounts of the two optical delay portions can be determined such that the time difference between the two optically angle modulated signals that are input to the optical combining/splitting portion corresponds to the optical delay amount T1.

It should be noted that in the seventeenth embodiment, an electrical signal that is detected by the optical detecting portion is radiated as a wireless signal. However, as in the tenth embodiment, the configuration can be such that the receiver apparatus extracts selectively each data signal, using the demodulating/separating portion.

### (Eighteenth Embodiment)

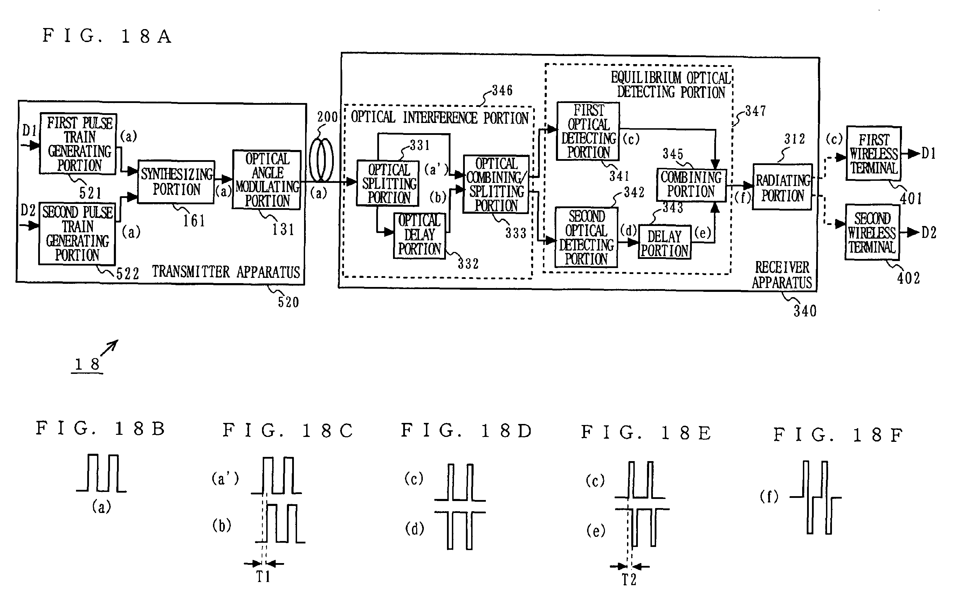

FIG. 18A is a diagram showing the configuration of a transmission system 18 of an eighteenth embodiment of the present invention. In FIG. 18A, the transmission system 18 includes a transmitter apparatus 520, an optical transmission path 200, a receiver apparatus 340, a first wireless terminal 401 and a second wireless terminal 402. The transmitter apparatus 520 and the receiver apparatus 340 are connected via the optical transmission path 200. The transmitter apparatus 520 includes a first pulse train generating portion 521, a second pulse train generating portion 522, a synthesizing portion 161, and an optical angle modulating portion 131. The receiver apparatus 340 includes an optical interference portion 346, an optical balance detecting portion 347 and a radiating portion 312. The optical interference portion 346 includes an optical splitting portion 331, an optical delay portion 332, and an optical combining/splitting portion 333. The optical balance detecting portion 347 includes a first optical detecting portion 341, a second optical detecting portion 342, a delay portion 343, and a combining portion 345. In FIG. 18A, the block having the same function as in the sixth or the seventeenth embodiment bears the same referential number and description thereof will be omitted.

Next, the operation of the transmission system 18 will be described. The configuration of this embodiment is similar to that of the sixth embodiment (see FIG. 6) described above, and therefore only different aspects will be described below. The first and the second pulse train generating portions 521 and 522 convert input data signals D1 and D2 to a first and a second pulse train, based on predetermined encoding patterns corresponding to the data signals, and output them. The pulse width of the pulse train (a) output fromthe first and the secondpulse train generating portions 521 and 522 is wider than that of the pulse train output from the first and the second pulse train generating portions 141 and 142 in the seventh embodiment (see FIG. 18B) . The synthesizing portion 161 synthesizes the pulse trains output from the first and the second pulse train generating portions 521 and 522 and outputs the result to the optical angle modulating portion 131. Thereafter, the same operations as in the sixth embodiment are performed, so that bipolar short pulse trains are radiated from the radiating portion 312 (see FIGS. 18C to 18F).

Thus, according to the eighteenth embodiment, bipolar short pulse trains can be generated using optical signal processing. Therefore, the frequency spectrum of the pulse trains can be increased without increasing the burden on the transmitter apparatus and the transmission path, and the interference robustness of wireless signals can be further increased, and multiplexing and accommodation of more wireless terminals can be realized.

In the eighteenth embodiment, the optical delay portion delays one of the optically angle modulated signals that are output from the optical splitting portion. However, two optical delay portions may be inserted so as to delay both the optically angle modulated signals. Also in this case, the delay amounts of the two optical delay portions can be determined such that the time difference between the two optically angle modulated signals that are input to the optical combining/splitting portion corresponds to the optical delay amount T1.

In the eighteenth embodiment, only the second differential pulse that is output from the second optical detecting portion is delayed. However, two optical delay portions may be inserted so that both of the first and the second differential pulses can be delayed. Also in this case, the delay amounts of the two optical delay portions can be determined such that the time difference between the first and the second differential pulses that are input to the combining portion corresponds to the optical delay amount T2.

It should be noted that in the eighteenth embodiment, an electrical signal that is detected by the optical detecting portion is radiated as a wireless signal. However, as in the tenth embodiment, the configuration can be such that the receiver apparatus extracts selectively each data signal, using the demodulating/separating portion.

In the third, fourth, fifteenth, and sixteenth embodiments, the pulse compressing portion is provided in the receiver apparatus, but may be provided on the optical transmission path.

In the first to the eighteenth embodiments, the number of both the pulse train generating portions and the wireless terminals is 2, but the numbers do not have to be the same. The number other than 2 also can be used.

### INDUSTRIAL APPLICABILITY

The optical transmission system of the present invention and the transmitter apparatus and the receiver apparatus used therein can transmit short pulse signals without being affected by the characteristics of the transmission path, and thus are useful in the field of communications or the like.

## Claims

1. An optical transmission system for optically transmitting at least one data signal, comprising
pulse train generating means for converting each of the at least one data signal respectively to a pulse train, based on at least one encoding pattern that is uniquely predetermined corresponding to the at least one data signal, and outputting the pulse train;
optical modulating means for converting the at least one pulse train output from the pulse train generating means to an optically modulated signal and outputting the signal;
an optical transmission path for transmitting the optically modulated signal that is output from the optical modulating means;
optical detecting means for converting the optically modulated signal transmitted on the optical transmission path to an electrical signal and outputting the signal; and
data signal extracting means for obtaining the pulse train from the electrical signal that is output from the optical detecting means based on a decoding pattern that uniquely corresponds to the encoding pattern and extracting the data signal.

2. The optical transmission system according to claim 1,
wherein the pulse train generating means converts one data signal to a pulse train.

3. The optical transmission system according to claim 2,
wherein the pulse train generating means comprises a pulse train generating portion for converting an input data signal to a pulse train based on a predetermined encoding pattern, and outputting the pulse train,
the optical modulatingmeans comprises an optical modulating portion for converting the pulse train output from the pulse train generating portion to an optically intensity modulated signal and outputting the signal,
the optical detecting means comprises an optical detecting portion for reconverting the optically intensity modulated signal transmitted on the optical transmission path to an electrical signal and outputting the signal, and
the data signal extracting means comprises a demodulating portion for extracting the pulse train from the electrical signal that is output from the optical detecting portion based on a decoding pattern that uniquely corresponds to the encoding pattern and demodulating the data signal.

4. The optical transmission system according to claim 2,
wherein the pulse train generating means comprises a pulse train generating portion for converting an input data signal to a pulse train based on a predetermined encoding pattern, and outputting the pulse train,
the optical modulating means comprises an optical modulating portion for converting the pulse train output from the pulse train generating portion to an optically intensity modulated signal and outputting the signal,
the optical detecting means comprises an optical detecting portion for reconverting the optically intensity modulated signal transmitted on the optical transmission path to an electrical signal and outputting the signal, and
the data signal extracting means comprises:
a radiating portion for radiating the electrical signal that is output from the detecting portion as a wireless signal, and
a wireless terminal for extracting the pulse train from the wireless signal radiated from the radiating portion based on a decoding pattern that uniquely corresponds to the encoding pattern and demodulating the data signal.

5. The optical transmission system according to claim 2,
wherein the pulse train generating means comprises a pulse train generating portion for converting an input data signal to a pulse train based on a predetermined encoding pattern, and outputting the pulse train, and
the optical modulating means comprises an optical modulating portion for converting the pulse train output from the pulse train generating portion to an optically intensity modulated signal and outputting the signal,
the optical transmission system further comprises a pulse compressing portion for receiving the optically intensity modulated signal transmitted in the transmission path, compressing a pulse width of a pulse train, which is modulation information, or reducing a rising time and/or a falling time of the pulse train, and outputting a result,
wherein the optical detecting means comprises:
an optical detecting portion for converting an optical signal output from the pulse compressing portion to an electrical signal and outputting the signal.

6. The optical transmission system according to claim 2,
wherein the pulse train generating means comprises:
a pulse train generating portion for converting an input data signal to a pulse train based on a predetermined encoding pattern, and outputting the pulse train, and
a filter portion for increasing a pulse width of the pulse train output from the pulse train generating portion, or increasing a rising time and a falling time of the pulse train, and outputting a result,
the optical modulating means comprises an optical modulating portion for converting the pulse train output from the filter portion to an optically intensity modulated signal and outputting the signal,
the optical transmission system further comprises a pulse compressing portion for receiving the optically intensity modulated signal transmitted in the transmission path, compressing a pulse width of a pulse train, which is modulation information, or reducing a rising time and/or a falling time of the pulse train, and outputting a result,
wherein the optical detecting means comprises:
an optical detecting portion for converting an optical signal output from the pulse compressing portion to an electrical signal and outputting the signal.

7. The optical transmission system according to claim 2,
wherein the pulse train generating means comprises a pulse train generating portion for converting an input data signal to a pulse train based on a predetermined encoding pattern, and outputting the pulse train, and
the optical modulating means comprises an optical angle modulating portion for converting the pulse train output from the pulse train generating portion to an optically angle modulated signal and outputting the signal,
the optical detecting means comprises:
an optical interference portion for receiving an optically angle modulated signal transmitted on the optical transmission path and detecting correlation between adjacent bits of a pulse train, which is modulation information, so as to output two optical differential signals that have opposite polarities to each other and correspond to differential components of the pulse train, and
an optical detecting portion for converting one of the optical differential signals that are output from the optical interference portion to an electrical signal and outputting the signal.

8. The optical transmission system according to claim 7,
wherein the optical interference portion comprises:
an optical splitting portion for splitting the input optically angle modulated signal into two,
an optical delay portion for supplying a predetermined optical delay amount to one or both of the optically angle modulated signals that are split and output from the optical splitting portion and outputting a result, and
an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other.

9. The optical transmission system according to claim 8,
wherein the predetermined optical delay amount is smaller than one bit width of the pulse train.

10. The optical transmission system according to claim 2,
wherein the pulse train generating means comprises a pulse train generating portion for converting an input data signal to a pulse train based on a predetermined encoding pattern, and outputting the pulse train, and
the optical modulating means comprises an optical angle modulating portion for converting the pulse train output from the pulse train generating portion to an optically angle modulated signal and outputting the signal,
the optical detecting means comprises:
an optical interference portion for receiving an optically angle modulated signal transmitted on the optical transmission path and detecting correlation between adjacent bits of a pulse train, which is modulation information, so as to output two optical differential signals that have opposite polarities to each other and correspond to differential components of the pulse train, and
an optical balance detecting portion for reconverting the two optical differential signals that are output from the optical interference portion to respective electrical signals and for combining the two signals so as to generate and output a bipolar differential pulse train.

11. The optical transmission system according to claim 10,
wherein the optical interference portion comprises:
an optical splitting portion for splitting the input optically angle modulated signal into two,
an optical delay portion for supplying a predetermined optical delay amount to one or both of the optically angle modulated signals that are split and output from the optical splitting portion and outputting a result, and
an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other.

12. The optical transmission system according to claim 11,
wherein the predetermined optical delay amount is smaller than one bit width of the pulse train.

13. The optical transmission system according to claim 10,
wherein the optical balance detecting portion comprises:
a first optical detecting portion for reconverting one of the optical differential signals that are output from the optical interference portion to a first differential pulse train, which is an electrical signal, and outputting the signal;
a second optical detecting portion for reconverting the other optical differential signal that is output from the optical interference portion to a second differential pulse train, which is an electrical signal, and outputting the signal;
a delay portion for supplying a predetermined electrical delay amount to the first differential pulse train output from the first optical detecting portion and/or the second differential pulse train output from the second optical detecting portion and outputting a result; and
a combining portion for combining the first differential pulse train and the second differential pulse train that have been subjected to the delay processing in the delay portion to output a bipolar differential pulse train.

14. The optical transmission system according to claim 10,
wherein the optical interference portion comprises:
an optical splitting portion for splitting the input optically angle modulated signal into two,
an optical delay portion for supplying a predetermined optical delay amount to one or both of the optically angle modulated signals that are split and output from the optical splitting portion and outputting a result, and
an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other,
wherein the optical balance detecting portion comprises:
a first optical detecting portion for reconverting one of the optical differential signals that are output from the optical interference portion to a first differential pulse train, which is an electrical signal, and outputting the signal;
a second optical detecting portion for reconverting the other optical differential signal that is output from the optical interference portion to a second differential pulse train, which is an electrical signal, and outputting the signal;
a delay portion for supplying a predetermined electrical delay amount to the first differential pulse train output from the first optical detecting portion and/or the second differential pulse train output from the second optical detecting portion and outputting a result; and
a combining portion for combining the first differential pulse train and the second differential pulse train that have been subjected to the delay processing in the delay portion to output a bipolar differential pulse train.

15. The optical transmission system according to claim 14,
wherein the predetermined electrical delay amount is equal to the predetermined optical delay amount.

16. The optical transmission system according to claim 2,
wherein the pulse train generating means comprises a pulse train generating portion for converting an input data signal to a pulse train based on a predetermined encoding pattern, and outputting the pulse train, and
the optical modulating means comprises an optical modulating portion for converting the pulse train output from the pulse train generating portion to an optically intensity modulated signal and outputting the signal,
the optical transmission system further comprises a wavelength dispersing portion that has wavelength dispersion characteristics and receives the optically intensity modulated signal transmitted on the optical transmission path, compresses a pulse width of a pulse train or a synthesized signal, which is modulation information, or reduces a rising time and/or a falling time of the pulse train, and outputting a result,
wherein the optical detecting means comprises:
an optical detecting portion for converting an optical signal output from the wavelength dispersing portion to an electrical signal and outputting the signal.

17. The optical transmission system according to claim 16,
wherein the optical modulating portion uses a directly optical modulation scheme in which a current injected to a semiconductor laser is modulated with an input pulse train to output an optically intensity modulated signal.

18. The optical transmission system according to claim 1,
wherein the pulse train generating means converts at least 2 data signals to pulse trains.

19. The optical transmission system according to claim 18,
wherein the pulse train generating means comprises a plurality of pulse train generating portions for converting a plurality of data signals to respective pulse trains that are of predetermined modulation types, based on encoding patterns each of which is predetermined corresponding to an input data signal and is different from one another, and outputting the pulse train, and
wherein the optical modulating means comprises:
a plurality of optical modulating portions that are provided corresponding to the pulse train generating portions and convert the pulse trains output from the respective pulse train generating portions to respective optically modulated signals and outputting the signals, and
an optical combining portion for combining the optically modulated signals output from the plurality of optical modulating portions and outputting a result to the optical transmission path.

20. The optical transmission system according to claim 19,
wherein the optical detecting means comprises an optical detecting portion for reconverting the optically modulated signals transmitted on the optical transmission path to electrical signals and outputting the signals, and
the data signal extracting means comprises a demodulating/separating portion for extracting the pulse trains from the electrical signals that are output from the optical detecting portion based on decoding patterns that uniquely correspond to the plurality of encoding patterns and demodulating the data signals.

21. The optical transmission system according to claim 19,
wherein the optical detecting means comprises:
an optical splitting portion for splitting the optically modulated signal transmitted on the optical transmission path to a plurality of signals and outputting the signals, and
a plurality of optical detecting portions that are provided corresponding respectively to the plurality of optically modulated signals that are split and output by the optical splitting portion, and reconvert the optically modulated signals to electrical signals to output the signals, and
wherein the data signal extracting means comprises a plurality of demodulating/separating portion that are provided corresponding respectively to the plurality of optical detecting portions and extract the pulse trains from the electrical signals that are output from the optical detecting portion based on decoding patterns that uniquely correspond to the plurality of encoding patterns and demodulate the data signals.

22. The optical transmission system according to claim 19, further comprising a data optical modulating portion for converting a data signal having a lower rate than a repetitive cycle of pulse trains output from the plurality of pulse train generating portions to an optically modulated signal and outputting the signal,
wherein the optical synthesizing portion further synthesizes the data signal output from the data optical modulating portion, and
the data signal extracting means comprises:
a data separating portion for outputting the electrical signals output from the optical detecting portion separated into the data signal having a lower rate than the repetitive cycle of the pulse train and other signals (synthesized signal), and
a demodulating/separating portion for extracting the pulse trains from the synthesized signal output from the data separating portion based on decoding patterns that uniquely correspond to the plurality of encoding patterns and demodulating the data signals.

23. The optical transmission system according to claim 19, further comprising a wavelength control portion for controlling such that wavelengths of optically modulated signals output from the plurality of optical modulating portions do not overlap each other.

24. The optical transmission system according to claim 18,
wherein the pulse train generating means comprises a plurality of pulse train generating portions for converting a plurality of input data signals to respective pulse trains that are of predetermined modulation types, based on encoding patterns each of which is predetermined corresponding to the input data signal and different from one another, and outputting the pulse train, and
wherein the optical modulating means comprises:
a synthesizing portion for outputting an electrical signal obtained by synthesizing pulse trains output from the plurality of pulse train generating portions, and
an optical modulating portion for converting the electrical signal output from the synthesizing portion to an optically modulated signal and outputting the signal.

25. The optical transmission system according to claim 24,
wherein the optical detecting means comprises an optical detecting portion for reconverting the optically modulated signals transmitted on the optical transmission path to electrical signals and outputting the signals, and
the data signal extracting means comprises a demodulating/separating portion for extracting the pulse trains from the electrical signals that are output from the optical detecting portion based on decoding patterns that uniquely correspond to the plurality of encoding patterns and demodulating the data signals.

26. The optical transmission system according to claim 24,
wherein the optical detecting means comprises an optical detecting portion for reconverting the optically modulated signals transmitted on the optical transmission path to electrical signals and outputting the signals, and
the data signal extracting means comprises:
a radiating portion for radiating the electrical signals output from the optical detecting portion as wireless signals; and
a plurality of wireless terminals for extracting the pulse trains from the wireless signals that are output from the radiating portion based on decoding patterns that uniquely correspond to the plurality of encoding patterns and demodulating the data signals.

27. The optical transmission system according to claim 24,
wherein the optical detecting means comprises:
an optical splitting portion for splitting the optically modulated signal transmitted on the optical transmission path to a plurality of signals and outputting the signals, and
a plurality of optical detecting portions that are provided corresponding respectively to the plurality of optically modulated signals that are split and output by the optical splitting portion, and reconvert the optically modulated signals to electrical signals and outputs the signals, and
wherein the data signal extracting means comprises a plurality of demodulating/separating portion that are provided corresponding respectively to the plurality of optical detecting portions and extract the pulse trains from the electrical signals that are output from the optical detecting portion based on decoding patterns that uniquely correspond to the plurality of encoding patterns and demodulate the data signals.

28. The optical transmission system according to claim 24,
wherein the synthesizing portion further synthesizes a data signal having a lower rate than a repetitive cycle of pulse trains output from the plurality of pulse train generating portions,
wherein the optical detecting means comprises:
an optical splitting portion for splitting the optically modulated signal transmitted on the optical transmission path to a plurality of signals and outputting the signals,
a plurality of optical detecting portions that are provided corresponding respectively to the plurality of optically modulated signals that are split and output by the optical splitting portion, and reconvert the optically modulated signals to electrical signals and outputs the signals, and
data optical detecting portion for reconverting one of the optically modulated signals that are split and output by the optical splitting portion to a data signal having a lower rate than the repetitive cycle of the pulse trains output from the plurality of pulse train generating portions and outputting the signal,
wherein the data signal extracting means comprises a plurality of demodulating/separating portions that are provided corresponding respectively to the plurality of optical detecting portions and extract the pulse trains from the electrical signals that are output from the optical detecting portion based on decoding patterns that uniquely correspond to the plurality of encoding patterns and demodulate the data signals.

29. The optical transmission system according to claim 24, further comprising a pulse compressing portion for receiving the optically intensity modulated signal transmitted in the transmission path, compressing a pulse width of a pulse train, which is modulation information, or reducing a rising time and/or a falling time of the pulse train, and outputting a result,
wherein the optical detecting means comprises:
an optical detecting portion for converting an optical signal output from the pulse compressing portion to an electrical signal and outputting the signal.

30. The optical transmission system according to claim 24, further comprising:
a filter portion that is provided between each of the pulse train generating portions and the synthesizing portion and increases a pulse width of the pulse train output from the pulse train generating portion, or increases a rising time and a falling time of the pulse train and outputs a result, and
a pulse compressing portion for receiving the optically intensity modulated signal transmitted in the transmission path, compressing a pulse width of a pulse train, which is modulation information, or reducing a rising time and/or a falling time of the pulse train, and outputting a result,
wherein the optical detecting means comprises:
an optical detecting portion for converting an optical signal output from the pulse compressing portion to an electrical signal and outputting the signal.

31. The optical transmission system according to claim 2,
wherein the optical modulating portion is an optical angle modulating portion for converting the pulse train output from the pulse train generating portion to an optically angle modulated signal and outputting the signal, and
the optical detecting means comprises:
an optical interference portion for receiving an optically angle modulated signal transmitted on the optical transmission path and detecting correlation between adjacent bits of a pulse train, which is modulation information, so as to output two optical differential signals that have opposite polarities to each other and correspond to differential components of the pulse train, and
an optical detecting portion for converting one of the optical differential signals that are output from the optical interference portion to an electrical signal and outputting the signal.

32. The optical transmission system according to claim 32,
wherein the optical interference portion comprises:
an optical splitting portion for splitting the input optically angle modulated signal into two,
an optical delay portion for supplying a predetermined optical delay amount to one or both of the optically angle modulated signals that are split and output from the optical splitting portion and outputting a result, and
an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other.

33. The optical transmission system according to claim 32,
wherein the predetermined optical delay amount is smaller than one bit width of the pulse train.

34. The optical transmission system according to claim 24,
wherein the optical modulating portion is an optical angle modulating portion for converting the pulse train output from the pulse train generating portion to an optically angle modulated signal and outputting the signal,
the optical detecting means comprises:
an optical interference portion for receiving an optically angle modulated signal transmitted on the optical transmission path and detecting correlation between adjacent bits of a pulse train, which is modulation information, so as to output two optical differential signals that have opposite polarities to each other and correspond to differential components of the pulse train, and
an optical balance detecting portion for reconverting the two optical differential signals that are output from the optical interference portion to respective electrical signals and for combining the two signals so as to generate and output a bipolar differential pulse train.

35. The optical transmission system according to claim 34,
wherein the optical interference portion comprises:
an optical splitting portion for splitting the input optically angle modulated signal into two,
an optical delay portion for supplying a predetermined optical delay amount to one or both of the optically angle modulated signals that are split and output from the optical splitting portion and outputting a result, and
an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other.

36. The optical transmission system according to claim 35,
wherein the predetermined optical delay amount is smaller than one bit width of the pulse train.

37. The optical transmission system according to claim 34,
wherein the optical balance detecting portion comprises:
a first optical detecting portion for reconverting one of the optical differential signals that are output from the optical interference portion to a first differential pulse train, which is an electrical signal, and outputting the signal;
a second optical detecting portion for reconverting the other optical differential signal that is output from the optical interference portion to a second differential pulse train, which is an electrical signal, and outputting the signal;
a delay portion for supplying a predetermined electrical delay amount to the first differential pulse train output from the first optical detecting portion and/or the second differential pulse train output from the second optical detecting portion and outputting a result; and
a combining portion for combining the first differential pulse train and the second differential pulse train that have been subjected to the delay processing in the delay portion to output a bipolar differential pulse train.

38. The optical transmission system according to claim 34,
wherein the optical interference portion comprises:
an optical splitting portion for splitting the input optically angle modulated signal into two,
an optical delay portion for supplying a predetermined optical delay amount to one or both of the optically angle modulated signals that are split and output from the optical splitting portion and outputting a result, and
an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other,
wherein the optical balance detecting portion comprises:
a first optical detecting portion for reconverting one of the optical differential signals that are output from the optical interference portion to a first differential pulse train, which is an electrical signal, and outputting the signal;
a second optical detecting portion for reconverting the other optical differential signal that is output from the optical interference portion to a second differential pulse train, which is an electrical signal, and outputting the signal;
a delay portion for supplying a predetermined electrical delay amount to the first differential pulse train output from the first optical detecting portion and/or the second differential pulse train output from the second optical detecting portion and outputting a result; and
a combining portion for combining the first differential pulse train and the second differential pulse train that have been subjected to the delay processing in the delay portion to output a bipolar differential pulse train.

39. The optical transmission system according to claim 38,
wherein the predetermined electrical delay amount is equal to the predetermined optical delay amount.

40. The optical transmission system according to claim 24,
wherein the optical modulating portion converts the pulse train output from the pulse train generating portion to an optically intensity modulated signal and outputs the signal,
the optical transmission system further comprises a wavelength dispersing portion that has wavelength dispersion characteristics and receives the optically intensity modulated signal transmitted on the optical transmission path, compresses a pulse width of a pulse train or a synthesized signal, which is modulation information, or reduces a rising time and/or a falling time of the pulse train, and outputting a result,
wherein the optical detecting means comprises:
an optical detecting portion for converting an optical signal output from the wavelength dispersing portion to an electrical signal and outputting the signal.

41. The optical transmission system according to claim 40,
wherein the optical modulating portion uses a directly optical modulation scheme in which a current injected to a semiconductor laser is modulated with an input pulse train to output an optically intensity modulated signal.

42. The optical transmission system according to claim 1,
wherein a modulation type of a pulse train converted by the pulse train generating means is a pulse position modulation type.

43. The optical transmission system according to claim 1,
wherein a pulse train obtained by the data signal extracting means is an UWB (Ultra Wide Band) signal.

44. A transmitter apparatus for optically transmitting at least one data signal, comprising
pulse train generating means for converting each of the at least one data signal respectively to a pulse train, based on at least one encoding pattern that is uniquely predetermined corresponding to the at least one data signal, and outputting the pulse train; and
optical modulating means for converting the at least one pulse train output from the pulse train generating means to an optically modulated signal and outputting the signal to an optical transmission path.

45. A receiver apparatus for receiving an optically modulated signal that has been modulated with a pulse train obtained by converging at least one data signal, based on at least one encoding pattern that is uniquely predetermined corresponding to the at least one data signal, via an optical transmission path, comprising:
optical detecting means for converting the optically modulated signal transmitted on the optical transmission path to an electrical signal and outputting the signal; and
data signal extracting means for obtaining the pulse train from the electrical signal that is output from the optical detecting means based on a decoding pattern that uniquely corresponds to the encoding pattern and extracting the data signal.

## Amended claims

### Amended claims in accordance with Rule 86(2) EPC.

[Received by the International Bureau on August 20, 2004 (20. 08. 04); originally-filed claims 2-4,25-27 are cancelled; originally-filed claims 1,5-7,10,16,18-22,24,28,31,32 are amended; no changes are made in the other claim. (19 pages) (English translation: 25 pages)]
(Amended) An optical transmission system for optically transmitting one data signal, comprising
pulse train generating means for converting the one data signal to a pulse train, based on one encoding pattern that is uniquely predetermined corresponding to the one data signal, and outputting the pulse train;
optical modulating means for converting one pulse train output from the pulse train generating means to an optically modulated signal and outputting the signal;
an optical transmission path for transmitting the optically modulated signal that is output from the optical modulating means;
optical detecting means for converting the optically modulated signal transmitted on the optical transmission path to an electrical signal and outputting the signal; and
data signal extracting means for obtaining the pulse train from the electrical signal that is output from the optical detecting means based on a decoding pattern that uniquely corresponds to the encoding pattern and extracting the data signal.
(Cancelled)
(Cancelled)
(Cancelled)
(Amended) The optical transmission system according to claim 1,
wherein the pulse train generating means comprises a pulse train generating portion for converting the data signal input to a pulse train based on the predetermined encoding pattern, and outputting the pulse train, and
the optical modulating means comprises an optical modulating portion for converting the pulse train output from the pulse train generating portion to an optically intensity modulated signal and outputting the signal,
the optical transmission system further comprises a pulse compressing portion for receiving the optically intensity modulated signal transmitted in the transmission path, compressing a pulse width of a pulse train, which is modulation information, or reducing a rising time and/or a falling time of the pulse train, and outputting a result,
wherein the optical detecting means comprises:
an optical detecting portion for converting an optical signal output from the pulse compressing portion to an electrical signal and outputting the signal.
(Amended) The optical transmission system according to claim 1,
wherein the pulse train generating means comprises:
a pulse train generating portion for converting the data signal input to a pulse train based on the predetermined encoding pattern, and outputting the pulse train, and
a filter portion for increasing a pulse width of the pulse train output from the pulse train generating portion, or increasing a rising time and a falling time of the pulse train, and outputting a result,
the optical modulating means comprises an optical modulating portion for converting the pulse train output from the filter portion to an optically intensity modulated signal and outputting the signal,
the optical transmission system further comprises a pulse compressing portion for receiving the optically intensity modulated signal transmitted in the transmission path, compressing a pulse width of a pulse train, which is modulation information, or reducing a rising time and/or a falling time of the pulse train, and outputting a result,
wherein the optical detecting means comprises:
an optical detecting portion for converting an optical signal output from the pulse compressing portion to an electrical signal and outputting the signal.
(Amended) The optical transmission system according to claim 1,
wherein the pulse train generating means comprises a pulse train generating portion for converting the data signal input to a pulse train based on the predetermined encoding pattern, and outputting the pulse train, and
the optical modulating means comprises an optical angle modulating portion for converting the pulse train output from the pulse train generating portion to an optically angle modulated signal and outputting the signal,
the optical detecting means comprises:
an optical interference portion for receiving an optically angle modulated signal transmitted on the optical transmission path and detecting correlation between adjacent bits of a pulse train, which is modulation information, so as to output two optical differential signals that have opposite polarities to each other and correspond to differential components of the pulse train, and
an optical detecting portion for converting one of the optical differential signals that are output from the optical interference portion to an electrical signal and outputting the signal.
The optical transmission system according to claim 7,
wherein the optical interference portion comprises:
an optical splitting portion for splitting the input optically angle modulated signal into two,
an optical delay portion for supplying a predetermined optical delay amount to one or both of the optically angle modulated signals that are split and output from the optical splitting portion and outputting a result, and
an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other.
The optical transmission system according to claim 8,
wherein the predetermined optical delay amount is smaller than one bit width of the pulse train.
(Amended) The optical transmission system according to claim 1,
wherein the pulse train generating means comprises a pulse train generating portion for converting the data signal input to a pulse train based on the predetermined encoding pattern, and outputting the pulse train, and
the optical modulating means comprises an optical angle modulating portion for converting the pulse train output from the pulse train generating portion to an optically angle modulated signal and outputting the signal,
the optical detecting means comprises:
an optical interference portion for receiving an optically angle modulated signal transmitted on the optical transmission path and detecting correlation between adjacent bits of a pulse train, which is modulation information, so as to output two optical differential signals that have opposite polarities to each other and correspond to differential components of the pulse train, and
an optical balance detecting portion for reconverting the two optical differential signals that are output from the optical interference portion to respective electrical signals and for combining the two signals so as to generate and output a bipolar differential pulse train.
The optical transmission system according to claim 10,
wherein the optical interference portion comprises:
an optical splitting portion for splitting the input optically angle modulated signal into two,
an optical delay portion for supplying a predetermined optical delay amount to one or both of the optically angle modulated signals that are split and output from the optical splitting portion and outputting a result, and
an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other.
The optical transmission system according to claim 11,
wherein the predetermined optical delay amount is smaller than one bit width of the pulse train.
The optical transmission system according to claim 10,
wherein the optical balance detecting portion comprises:
a first optical detecting portion for reconverting one of the optical differential signals that are output from the optical interference portion to a first differential pulse train, which is an electrical signal, and outputting the signal;
a second optical detecting portion for reconverting the other optical differential signal that is output from the optical interference portion to a second differential pulse train, which is an electrical signal, and outputting the signal;
a delay portion for supplying a predetermined electrical delay amount to the first differential pulse train output from the first optical detecting portion and/or the second differential pulse train output from the second optical detecting portion and outputting a result; and
a combining portion for combining the first differential pulse train and the second differential pulse train that have been subjected to the delay processing in the delay portion to output a bipolar differential pulse train.
The optical transmission system according to claim 10,
wherein the optical interference portion comprises:
an optical splitting portion for splitting the input optically angle modulated signal into two,
an optical delay portion for supplying a predetermined optical delay amount to one or both of the optically angle modulated signals that are split and output from the optical splitting portion and outputting a result, and
an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other,
wherein the optical balance detecting portion comprises:
a first optical detecting portion for reconverting one of the optical differential signals that are output from the optical interference portion to a first differential pulse train, which is an electrical signal, and outputting the signal;
a second optical detecting portion for reconverting the other optical differential signal that is output from the optical interference portion to a second differential pulse train, which is an electrical signal, and outputting the signal;
a delay portion for supplying a predetermined electrical delay amount to the first differential pulse train output from the first optical detecting portion and/or the second differential pulse train output from the second optical detecting portion and outputting a result; and
a combining portion for combining the first differential pulse train and the second differential pulse train that have been subjected to the delay processing in the delay portion to output a bipolar differential pulse train.
The optical transmission system according to claim 14,
wherein the predetermined electrical delay amount is equal to the predetermined optical delay amount.
(Amended) The optical transmission system according to claim 1,
wherein the pulse train generating means comprises a pulse train generating portion for converting the data signal input to a pulse train based on the predetermined encoding pattern, and outputting the pulse train, and
the optical modulatingmeans comprises an optical modulating portion for converting the pulse train output from the pulse train generating portion to an optically intensity modulated signal and outputting the signal,
the optical transmission system further comprises a wavelength dispersing portion that has wavelength dispersion characteristics and receives the optically intensity modulated signal transmitted on the optical transmission path, compresses a pulse width of a pulse train or a synthesized signal, which is modulation information, or reduces a rising time and/or a falling time of the pulse train, and outputting a result,
wherein the optical detecting means comprises:
an optical detecting portion for converting an optical signal output from the wavelength dispersing portion to an electrical signal and outputting the signal.
The optical transmission system according to claim 16,
wherein the optical modulating portion uses a directly optical modulation scheme in which a current injected to a semiconductor laser is modulated with an input pulse train to output an optically intensity modulated signal.
(Amended) An optical transmission system for optically transmitting at least two data signals, comprising
pulse train generating means for converting the at least two data signals to respective pulse trains, based on at least two encoding patterns that are uniquely predetermined corresponding to the at least two data signals, and outputting the pulse trains;
optical modulating means for converting at least two pulse trains output from the pulse train generating means to optically modulated signals and outputting the signals;
an optical transmission path for transmitting the optically modulated signals that are output from the optical modulating means;
optical detecting means for converting the optically modulated signals transmitted on the optical transmission path to electrical signals and outputting the signals; and
data signal extracting means for obtaining the pulse trains from the electrical signals that are output from the optical detecting means based on decoding patterns that uniquely correspond to the encoding patterns and extracting the data signals.
(Amended) The optical transmission system according to claim 18,
wherein the pulse train generating means comprises a plurality of pulse train generating portions for converting the plurality of data signals to respective pulse trains that are of predetermined modulation types, based on the encoding patterns each of which is predetermined corresponding to the data signals input and is different from one another, and outputting the pulse train, and
wherein the optical modulating means comprises:
a plurality of optical modulating portions that are provided corresponding to the pulse train generating portions and convert the pulse trains output from the respective pulse train generating portions to respective optically modulated signals and outputting the signals, and
an optical combining portion for combining the optically modulated signals output from the plurality of optical modulating portions and outputting a result to the optical transmission path.
(Amended) The optical transmission system according to claim 19,
wherein the optical detecting means comprises an optical detecting portion for reconverting the optically modulated signals transmitted on the optical transmission path to electrical signals and outputting the signals, and
the data signal extracting means comprises a demodulating/separating portion for extracting the pulse trains from the electrical signals that are output from the optical detecting portion based on decoding patterns that uniquely correspond to a plurality of the encoding patterns and demodulating the data signals.
(Amended) The optical transmission system according to claim 19,
wherein the optical detecting means comprises:
an optical splitting portion for splitting the optically modulated signal transmitted on the optical transmission path to a plurality of signals and outputting the signals, and
a plurality of optical detecting portions that are provided corresponding respectively to the plurality of optically modulated signals that are split and output by the optical splitting portion, and reconvert the optically modulated signals to electrical signals to output the signals, and
wherein the data signal extracting means comprises a plurality of demodulating/separating portion that are provided corresponding respectively to the plurality of optical detecting portions and extract the pulse trains from the electrical signals that are output from the optical detecting portion based on decoding patterns that uniquely correspond to a plurality of the encoding patterns and demodulate the data signals.
(Amended) The optical transmission system according to claim 19, further comprising a data optical modulating portion for converting a data signal having a lower rate than a repetitive cycle of pulse trains output from the plurality of pulse train generating portions to an optically modulated signal and outputting the signal,
wherein the optical synthesizing portion further synthesizes the data signal output from the data optical modulating portion, and
the data signal extracting means comprises:
a data separating portion for outputting the electrical signals output from the optical detecting portion separated into the data signal having a lower rate than the repetitive cycle of the pulse train and other signals (synthesized signal), and
a demodulating/separating portion for extracting the pulse trains from the synthesized signal output from the data separating portion based on decoding patterns that uniquely correspond to a plurality of the encoding patterns and demodulating the data signals.
The optical transmission system according to claim 19, further comprising a wavelength control portion for controlling such that wavelengths of optically modulated signals output from the plurality of optical modulating portions do not overlap each other.
(Amended) The optical transmission system according to claim 18,
wherein the pulse train generating means comprises a plurality of pulse train generating portions for converting the plurality of input data signals to respective pulse trains that are of predetermined modulation types, based on the encoding patterns each of which is predetermined corresponding to the data signal input and different from one another, and outputting the pulse train, and
wherein the optical modulating means comprises:
a synthesizing portion for outputting an electrical signal obtained by synthesizing pulse trains output from the plurality of pulse train generating portions, and
an optical modulating portion for converting the electrical signal output from the synthesizing portion to an optically modulated signal and outputting the signal.
(Cancelled)
(Cancelled)
(Cancelled)
(Amended) The optical transmission system according to claim 24,
wherein the synthesizing portion further synthesizes a data signal having a lower rate than a repetitive cycle of pulse trains output from the plurality of pulse train generating portions,
wherein the optical detecting means comprises:
an optical splitting portion for splitting the optically modulated signal transmitted on the optical transmission path to a plurality of signals and outputting the signals,
a plurality of optical detecting portions that are provided corresponding respectively to the plurality of optically modulated signals that are split and output by the optical splitting portion, and reconvert the optically modulated signals to electrical signals and outputs the signals, and
data optical detecting portion for reconverting one of the optically modulated signals that are split and output by the optical splitting portion to a data signal having a lower rate than the repetitive cycle of the pulse trains output from the plurality of pulse train generating portions and outputting the signal,
wherein the data signal extracting means comprises a plurality of demodulating/separating portions that are provided corresponding respectively to the plurality of optical detecting portions and extract the pulse trains from the electrical signals that are output from the optical detecting portion based on decoding patterns that uniquely correspond to a plurality of the encoding patterns and demodulate the data signals.
The optical transmission system according to claim 24, further comprising a pulse compressing portion for receiving the optically intensity modulated signal transmitted in the transmission path, compressing a pulse width of a pulse train, which is modulation information, or reducing a rising time and/or a falling time of the pulse train, and outputting a result,
wherein the optical detecting means comprises:
an optical detecting portion for converting an optical signal output from the pulse compressing portion to an electrical signal and outputting the signal.
The optical transmission system according to claim 24, further comprising:
a filter portion that is provided between each of the pulse train generating portions and the synthesizing portion and increases a pulse width of the pulse train output from the pulse train generating portion, or increases a rising time and a falling time of the pulse train and outputs a result, and
a pulse compressing portion for receiving the optically intensity modulated signal transmitted in the transmission path, compressing a pulse width of a pulse train, which is modulation information, or reducing a rising time and/or a falling time of the pulse train, and outputting a result,
wherein the optical detecting means comprises:
an optical detecting portion for converting an optical signal output from the pulse compressing portion to an electrical signal and outputting the signal.
(Amended) The optical transmission system according to claim 24,
wherein the optical modulating portion is an optical angle modulating portion for converting the pulse train output from the pulse train generating portion to an optically angle modulated signal and outputting the signal, and
the optical detecting means comprises:
an optical interference portion for receiving an optically angle modulated signal transmitted on the optical transmission path and detecting correlation between adjacent bits of a pulse train, which is modulation information, so as to output two optical differential signals that have opposite polarities to each other and correspond to differential components of the pulse train, and
an optical detecting portion for converting one of the optical differential signals that are output from the optical interference portion to an electrical signal and outputting the signal.
(Amended) The optical transmission system according to claim 31,
wherein the optical interference portion comprises:
an optical splitting portion for splitting the input optically angle modulated signal into two,
an optical delay portion for supplying a predetermined optical delay amount to one or both of the optically angle modulated signals that are split and output from the optical splitting portion and outputting a result, and
an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other.
The optical transmission system according to claim 32,
wherein the predetermined optical delay amount is smaller than one bit width of the pulse train.
The optical transmission system according to claim 24,
wherein the optical modulating portion is an optical angle modulating portion for converting the pulse train output from the pulse train generating portion to an optically angle modulated signal and outputting the signal,
the optical detecting means comprises:
an optical interference portion for receiving an optically angle modulated signal transmitted on the optical transmission path and detecting correlation between adjacent bits of a pulse train, which is modulation information, so as to output two optical differential signals that have opposite polarities to each other and correspond to differential components of the pulse train, and
an optical balance detecting portion for reconverting the two optical differential signals that are output from the optical interference portion to respective electrical signals and for combining the two signals so as to generate and output a bipolar differential pulse train.
The optical transmission system according to claim 34,
wherein the optical interference portion comprises:
an optical splitting portion for splitting the input optically angle modulated signal into two,
an optical delay portion for supplying a predetermined optical delay amount to one or both of the optically angle modulated signals that are split and output from the optical splitting portion and outputting a result, and
an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other.
The optical transmission system according to claim 35,
wherein the predetermined optical delay amount is smaller than one bit width of the pulse train.
The optical transmission system according to claim 34,
wherein the optical balance detecting portion comprises:
a first optical detecting portion for reconverting one of the optical differential signals that are output from the optical interference portion to a first differential pulse train, which is an electrical signal, and outputting the signal;
a second optical detecting portion for reconverting the other optical differential signal that is output from the optical interference portion to a second differential pulse train, which is an electrical signal, and outputting the signal;
a delay portion for supplying a predetermined electrical delay amount to the first differential pulse train output from the first optical detecting portion and/or the second differential pulse train output from the second optical detecting portion and outputting a result; and
a combining portion for combining the first differential pulse train and the second differential pulse train that have been subjected to the delay processing in the delay portion to output a bipolar differential pulse train.
The optical transmission system according to claim 34,
wherein the optical interference portion comprises:
an optical splitting portion for splitting the input optically angle modulated signal into two,
an optical delay portion for supplying a predetermined optical delay amount to one or both of the optically angle modulated signals that are split and output from the optical splitting portion and outputting a result, and
an optical combining/splitting portion for combining the other optically angle modulated signal that is split and output from the optical splitting portion and an optically angle modulated signal that is output from the optical delay portion and splitting a result into two again so as to output optical differential signals having opposite polarities to each other,
wherein the optical balance detecting portion comprises:
a first optical detecting portion for reconverting one of the optical differential signals that are output from the optical interference portion to a first differential pulse train, which is an electrical signal, and outputting the signal;
a second optical detecting portion for reconverting the other optical differential signal that is output from the optical interference portion to a second differential pulse train, which is an electrical signal, and outputting the signal;
a delay portion for supplying a predetermined electrical delay amount to the first differential pulse train output from the first optical detecting portion and/or the second differential pulse train output from the second optical detecting portion and outputting a result; and
a combining portion for combining the first differential pulse train and the second differential pulse train that have been subjected to the delay processing in the delay portion to output a bipolar differential pulse train.
The optical transmission system according to claim 38,
wherein the predetermined electrical delay amount is equal to the predetermined optical delay amount.
The optical transmission system according to claim 24,
wherein the optical modulating portion converts the pulse train output from the pulse train generating portion to an optically intensity modulated signal and outputs the signal,
the optical transmission system further comprises a wavelength dispersing portion that has wavelength dispersion characteristics and receives the optically intensity modulated signal transmitted on the optical transmission path, compresses a pulse width of a pulse train or a synthesized signal, which is modulation information, or reduces a rising time and/or a falling time of the pulse train, and outputting a result,
wherein the optical detecting means comprises:
an optical detecting portion for converting an optical signal output from the wavelength dispersing portion to an electrical signal and outputting the signal.
The optical transmission system according to claim 40,
wherein the optical modulating portion uses a directly optical modulation scheme in which a current injected to a semiconductor laser is modulated with an input pulse train to output an optically intensity modulated signal.
The optical transmission system according to claim 1,
wherein a modulation type of a pulse train converted by the pulse train generating means is a pulse position modulation type.
The optical transmission system according to claim 1,
wherein a pulse train obtained by the data signal extracting means is an UWB (Ultra Wide Band) signal.
A transmitter apparatus for optically transmitting at least one data signal, comprising
pulse train generating means for converting each of the at least one data signal respectively to a pulse train, based on at least one encoding pattern that is uniquely predetermined corresponding to the at least one data signal, and outputting the pulse trains; and
optical modulating means for converting the at least one pulse train output from the pulse train generating means to an optically modulated signal and outputting the signal to an optical transmission path.
A receiver apparatus for receiving an optically modulated signal that has been modulated with a pulse train obtained by converging at least one data signal, based on at least one encoding pattern that is uniquely predetermined corresponding to the at least one data signal, via an optical transmission path, comprising:
optical detecting means for converting the optically modulated signal transmitted on the optical transmission path to an electrical signal and outputting the signal; and
data signal extracting means for obtaining the pulse train from the electrical signal that is output from the optical detecting means based on a decoding pattern that uniquely corresponds to the encoding pattern and extracting the data signal.
